# EUROPEAN PATENT SPECIFICATION

(11) **EP 3 073 713 B1**
(45) Date of publication and mention of the grant of the patent: **19.09.2018**
(21) Application number: 13899677.2
(22) Date of filing: 20.12.2013
(51) Int. Cl.: H04L 29/12, H04W 8/08, H04W 80/04

(54) **ROUTER OPTIMIZATION METHOD, ROUTER AND POSITION MANAGEMENT ENTITY**
ROUTEROPTIMIERUNGSVERFAHREN, ROUTER UND POSITIONSVERWALTUNGSEINHEIT
PROCÉDÉ D'OPTIMISATION DE ROUTEUR, ROUTEUR, ET ENTITÉ DE GESTION DE POSITION

(43) Date of publication of application: 28.09.2016
(73) Proprietor: Huawei Technologies Co., Ltd., Longgang District Shenzhen, Guangdong 518129 (CN)
(72) Inventor: HE, Ning, Shenzhen Guangdong 518129 (CN); XIONG, Chunshan, Shenzhen Guangdong 518129 (CN); LIU, Jianning, Shenzhen Guangdong 518129 (CN)
(74) Representative: Gill Jennings & Every LLP
(86) International application number: PCT/CN2013/090135
(87) International publication number: WO 2015/089837

(56) References cited:
- CN-A- 1 630 259
- CN-A- 101 088 258
- CN-A- 101 199 189
- US-A1- 2002 080 752
- US-B1- 6 574 214

## Description

### TECHNICAL FIELD

Embodiments of the present invention relate to the communications field, and more specifically, to a route optimization method, a router, and a location manager entity.

### BACKGROUND

In distributed mobility management (Distributed Mobility Management, DMM), when a user is currently in a roaming state, that is, when the user moves from a home network to a visited network, a forwarding tunnel is established between a mobile router (Mobility Router, MR) in the home network and an MR in the visited network. Then, after passing through the MR in the visited network, a packet sent by the user needs to pass through the forwarding tunnel between the MR in the visited network and the MR in the home network, pass through the MR in the home network, and then arrive at a destination address.

All data of a user in a roaming state is still transmitted over the home network, and therefore, when the user is far away from the home network, a problem of route redundancy is caused.

D1 discloses a method of eliminating the use of multiple source/destination headers attached to an information packet during the tunneling operation by using either a decapsulation/encapsulation or a forwarding operation with the encapsulated information packet.

D2 discloses a route optimization technique requiring no awareness of the Mobile IP protocol by a Correspondent Node when forwarding traffic using the shortest path between a Mobile Node and the Correspondent Node in a visiting domain.

D3 discloses a method and an access point for transferring data packets from a first portable source endpoint (PN) belonging to a first, preferably mobile network

(VN) to a second destination endpoint (CN) belonging to a second, preferably packet oriented network, wherein the first network may be moving relatively to the second network.

### SUMMARY

Embodiments of the present invention provide a route optimization method, a router, and a location manager entity, which can resolve a problem of route redundancy.

According to a first aspect, a route optimization method is provided, where the method includes: establishing a forwarding tunnel between a first mobile router MR in which first user equipment UE is currently located and a second MR in which second UE is currently located, where at least one UE of the first UE and the second UE is currently located in a visited network; and transmitting data between the first UE and the second UE over the forwarding tunnel.

With reference to the first aspect, in a first possible implementation manner, the establishing a forwarding tunnel between a first MR in which first UE is currently located and a second MR in which second UE is currently located includes: sending, by the first MR, a first route request message to a home location manager entity H-LM of the second UE, where the first route request message includes an Internet Protocol IP address of the second UE; receiving, by the first MR, a first route response message sent by the H-LM of the second UE, where the first route response message includes an address of the second MR; and establishing, by the first MR, a forwarding tunnel between the first MR and the second MR according to the address of the second MR.

With reference to the first possible implementation manner of the first aspect, in a second possible implementation manner, before the sending, by the first MR, a first route request message to an H-LM of the second UE, the method further includes: receiving, by the first MR, a packet sent by the first UE; acquiring, by the first MR, the IP address of the second UE in the packet; and buffering, by the first MR, the packet; and after the establishing, by the first MR, a forwarding tunnel between the first MR and the second MR according to the address of the second MR, the method further includes: transmitting, by the first MR, the packet to the second MR over the forwarding tunnel.

With reference to the first possible implementation manner and the foregoing implementation manner of the first aspect, in a third possible implementation manner, when the first UE is currently located in a home network, the first route request message further includes first flag bit information, and the first flag bit information is used to indicate that the first MR is a home mobile router H-MR of the first UE.

With reference to the first possible implementation manner and the foregoing implementation manners of the first aspect, in a fourth possible implementation manner, when the second UE is currently located in a home network, the first route response message further includes second flag bit information, and the second flag bit information is used to indicate that the second MR is an H-MR of the second UE.

With reference to the first possible implementation manner and the foregoing implementation manners of the first aspect, in a fifth possible implementation manner, the establishing, by the first MR, a forwarding tunnel between the first MR and the second MR according to the address of the second MR includes: sending, by the first MR, a first tunnel establishment request message to the second MR; and receiving, by the first MR, a first tunnel establishment response message sent by the second MR, so as to complete establishing the forwarding tunnel.

With reference to the first possible implementation manner and the foregoing implementation manners of the first aspect, in a sixth possible implementation manner, the establishing, by the first MR, a forwarding tunnel between the first MR and the second MR according to the address of the second MR includes: receiving, by the first MR, a second tunnel establishment request message sent by the second MR; and sending, by the first MR, a second tunnel establishment response message to the second MR, so as to complete establishing the forwarding tunnel.

With reference to the first possible implementation manner and the foregoing implementation manners of the first aspect, in a seventh possible implementation manner, after the establishing, by the first MR, a forwarding tunnel between the first MR and the second MR according to the address of the second MR, the method further includes: binding, by the first MR, the following information: an IP address of the first UE, the IP address of the second UE, the address of the second MR, and tunnel information of the forwarding tunnel.

With reference to the seventh possible implementation manner of the first aspect, in an eighth possible implementation manner, the method further includes: unbinding, by the first MR, the information when the first UE is currently located in a visited network and the first UE is not currently located within a service range of the first MR any longer, or when the second UE is currently located in a visited network and the second UE is not currently located within a service range of the second MR any longer.

With reference to the first possible implementation manner and the foregoing implementation manners of the first aspect, in a ninth possible implementation manner, the method further includes: releasing, by the first MR, the forwarding tunnel when the first UE is currently located in the visited network and the first UE is not currently located within the service range of the first MR any longer, or when the second UE is currently located in the visited network and the second UE is not currently located within the service range of the second MR any longer, and when the forwarding tunnel is not shared by another UE.

With reference to the ninth possible implementation manner of the first aspect, in a tenth possible implementation manner, the releasing, by the first MR, the forwarding tunnel includes: sending, by the first MR, a first tunnel release request message to the second MR; and receiving, by the first MR, a first tunnel release response message sent by the second MR, so as to complete releasing the forwarding tunnel.

With reference to the ninth possible implementation manner of the first aspect, in an eleventh possible implementation manner, the releasing, by the first MR, the forwarding tunnel includes: receiving, by the first MR, a second tunnel release request message sent by the second MR; and sending, by the first MR, a second tunnel release response message to the second MR, so as to complete releasing the forwarding tunnel.

With reference to the first aspect, in an eleventh possible implementation manner, when the first UE is currently located in a visited network, the establishing a forwarding tunnel between a first MR in which first UE is currently located and a second MR in which second UE is currently located includes: sending, by a third MR, a second route request message to an H-LM of the second UE, where the second route request message includes an IP address of the second UE; receiving, by the third MR, a second route response message sent by the H-LM of the second UE, where the second route response message includes an address of the second MR; and sending, by the third MR, a first route optimization RO command message to the first MR, where the first RO command message includes the address of the second MR, and the first RO command message is used by the first MR to establish the forwarding tunnel between the first MR and the second MR according to the address of the second MR; or sending, by the third MR, a second RO command message to the second MR, where the second RO command message includes an address of the first MR, and the second RO command message is used by the second MR to establish the forwarding tunnel between the first MR and the second MR according to the address of the first MR, where the third MR is an H-MR of the first UE.

According to a second aspect, a route optimization method is provided, where at least one UE in first UE and second UE is currently located in a visited network, and the method includes: receiving, by a home location manager entity H-LM of the first user equipment UE, a route request message sent by a second mobile router MR in which the second UE is currently located, where the route request message includes an Internet Protocol IP address of the first UE; and sending, by the H-LM of the first UE, a route response message to the second MR, where the route response message includes an address of a first MR in which the first UE is currently located.

With reference to the second aspect, in a first possible implementation manner, when the second UE is currently located in a home network, the route request message further includes first flag bit information, and the first flag bit information is used to indicate that the second MR is a home mobile router H-MR of the second UE.

With reference to the second aspect, in a second possible implementation manner, when the first UE is currently located in a home network, the route response message further includes second flag bit information, and the second flag bit information is used to indicate that the first MR is an H-MR of the first UE.

According to a third aspect, a route optimization method is provided, where the method includes: sending, by a mobile router MR in which first user equipment UE is currently located, a route request message to a home location manager entity H-LM of second UE, where the route request message includes an Internet Protocol IP address of the first UE and flag bit information, and the flag bit information is used to indicate that the MR is a home mobile router H-MR of the first UE; and receiving, by the MR, a route rejection message sent by the H-LM of the second UE.

According to a fourth aspect, a route optimization method is provided, where the method includes: receiving, by a home location manager entity H-LM of second user equipment UE, a route request message sent by a mobile router MR in which first UE is currently located, where the route request message includes an Internet Protocol IP address of the first UE and flag bit information, and the flag bit information is used to indicate that the MR is a home mobile router H-MR of the first UE; and sending, by the H-LM of the second UE, a route rejection message to the MR.

According to a fifth aspect, a route optimization method is provided, where first user equipment UE is currently located in a home network, and the method includes: sending, by a first mobile router MR in which the first UE is currently located, a route request message to a home location manager entity H-LM of second UE, where the route request message includes an Internet Protocol IP address of the first UE; and receiving, by the first MR, a route response message sent by the H-LM of the second UE, where the route response message includes flag bit information, and the flag bit information is used to indicate that a second MR in which the second UE is currently located is a home mobile router H-MR of the second UE.

According to a sixth aspect, a route optimization method is provided, where first user equipment UE is currently located in a home network, and the method includes: receiving, by a home location manager entity H-LM of second UE, a route request message sent by a first mobile router MR in which the first UE is currently located, where the route request message includes an Internet Protocol IP address of the first UE; and sending, by the H-LM of the second UE, a route response message to the first MR, where the route response message includes flag bit information, and the flag bit information is used to indicate that a second MR in which the second UE is currently located is a home mobile router H-MR of the second UE, so that the first MR terminates a route optimization process.

According to a seventh aspect, a mobile router MR is provided, where the MR is an MR in which first user equipment UE is currently located, and the MR includes: a sending unit, configured to send a route request message to a home location manager entity H-LM of second UE, where the route request message includes an Internet Protocol IP address of the second UE; a first receiving unit, configured to receive a route response message sent by the H-LM of the second UE, where the route response message includes an address of a second MR in which the second UE is currently located; and an establishing unit, configured to establish a forwarding tunnel between the MR and the second MR according to the address of the second MR, where at least one UE of the first UE and the second UE is currently located in a visited network.

With reference to the seventh aspect, in a first possible implementation manner, the MR further includes: a second receiving unit, configured to receive a packet sent by the first UE; an acquiring unit, configured to acquire the IP address of the second UE in the packet received by the second receiving unit; a buffering unit, configured to buffer the packet received by the second receiving unit; and a transmission unit, configured to transmit, to the second MR over the forwarding tunnel established by the establishing unit, the packet buffered by the buffering unit.

With reference to the seventh aspect or the foregoing implementation manner, in a second possible implementation manner, when the first UE is currently located in a home network, the route request message further includes first flag bit information, and the first flag bit information is used to indicate that the MR is a home mobile router H-MR of the first UE.

With reference to the seventh aspect or the foregoing implementation manners, in a third possible implementation manner, when the second UE is currently located in a home network, the route response message further includes second flag bit information, and the second flag bit information is used to indicate that the second MR is an H-MR of the second UE.

With reference to the seventh aspect or the foregoing implementation manners, in a fourth possible implementation manner, the establishing unit includes: a first sending subunit, configured to send a first tunnel establishment request message to the second MR; and a first receiving subunit, configured to receive a first tunnel establishment response message sent by the second MR, so as to complete establishing the forwarding tunnel.

With reference to the seventh aspect or the foregoing implementation manners, in a fifth possible implementation manner, the establishing unit includes: a second receiving subunit, configured to receive a second tunnel establishment request message sent by the second MR; and a second sending subunit, configured to send a second tunnel establishment response message to the second MR, so as to complete establishing the forwarding tunnel.

With reference to the seventh aspect or the foregoing implementation manners, in a sixth possible implementation manner, the MR further includes a binding unit, configured to bind the following information: an IP address of the first UE, the IP address of the second UE, the address of the second MR, and tunnel information of the forwarding tunnel.

With reference to the sixth possible implementation manner of the seventh aspect, in a seventh possible implementation manner, the MR further includes an unbinding unit, configured to unbind the information when the first UE is currently located in a visited network and the first UE is not currently located within a service range of the MR any longer, or when the second UE is currently located in a visited network and the second UE is not currently located within a service range of the second MR any longer.

With reference to the seventh aspect or the foregoing implementation manners, in an eighth possible implementation manner, the MR further includes a releasing unit, configured to release the forwarding tunnel when the forwarding tunnel is not shared by another UE.

With reference to the eighth possible implementation manner of the seventh aspect, in a ninth possible implementation manner, the releasing unit includes: a third sending subunit, configured to send a first tunnel release request message to the second MR; and a third receiving subunit, configured to receive a first tunnel release response message sent by the second MR, so as to complete releasing the forwarding tunnel.

With reference to the eighth possible implementation manner of the seventh aspect, in a tenth possible implementation manner, the releasing unit includes: a fourth receiving subunit, configured to receive a second tunnel release request message sent by the second MR; and a fourth sending subunit, configured to send a second tunnel release response message to the second MR, so as to complete releasing the forwarding tunnel.

According to an eighth aspect, a mobile router MR is provided, where the MR is a home mobile router H-MR of first user equipment UE, and includes: a first sending unit, configured to send a route request message to a home location manager entity H-LM of second UE, where the route request message includes an IP address of the second UE; a receiving unit, configured to receive a route response message sent by the H-LM of the second UE, where the route response message includes an address of a second MR in which the second UE is currently located; and a second sending unit, configured to send a first route optimization RO command message to a first MR in which the first UE is currently located, where the first RO command message includes the address of the second MR, and the first RO command message is used by the first MR to establish a forwarding tunnel between the first MR and the second MR according to the address of the second MR; or configured to send a second RO command message to the second MR, where the second RO command message includes an address of the first MR, and the second RO command message is used by the second MR to establish a forwarding tunnel between the first MR and the second MR according to the address of the first MR, where the first UE is currently located in a visited network.

According to a ninth aspect, a location manager entity LM is provided, where the LM is a home location manager entity H-LM of first user equipment UE, and includes: a receiving unit, configured to receive a route request message sent by a second mobile router MR in which second UE is currently located, where the route request message includes an Internet Protocol IP address of the first UE; and a sending unit, configured to send a route response message to the second MR, where the route response message includes an address of a first MR in which the first UE is currently located, where at least one UE of the first UE and the second UE is currently located in a visited network.

With reference to the ninth aspect, in a first possible implementation manner, when the second UE is currently located in a home network, the route request message further includes first flag bit information, and the first flag bit information is used to indicate that the second MR is a home mobile router H-MR of the second UE.

With reference to the ninth aspect, in a second possible implementation manner, when the first UE is currently located in a home network, the route response message further includes second flag bit information, and the second flag bit information is used to indicate that the first MR is an H-MR of the first UE.

According to a tenth aspect, a mobile router MR is provided, where the MR is an MR in which first user equipment UE is currently located, and includes: a sending unit, configured to send a route request message to a home location manager entity H-LM of second UE, where the route request message includes an Internet Protocol IP address of the first UE and flag bit information, and the flag bit information is used to indicate that the MR is a home mobile router H-MR of the first UE; and a receiving unit, configured to receive a route rejection message sent by the H-LM of the second UE.

According to an eleventh aspect, a location manager entity LM is provided, where the LM is a home location manager entity H-LM of second user equipment UE, and includes: a receiving unit, configured to receive a route request message sent by a mobile router MR in which first UE is currently located, where the route request message includes an Internet Protocol IP address of the first UE and flag bit information, and the flag bit information is used to indicate that the MR is a home mobile router H-MR of the first UE; and a sending unit, configured to send a route rejection message to the MR.

According to a twelfth aspect, a mobile router MR is provided, where the MR is an MR in which first user equipment UE is currently located, and includes: a sending unit, configured to send a route request message to a home location manager entity H-LM of second UE, where the route request message includes an Internet Protocol IP address of the first UE; and a receiving unit, configured to receive a route response message sent by the H-LM of the second UE, where the route response message includes flag bit information, and the flag bit information is used to indicate that a second MR in which the second UE is currently located is a home mobile router H-MR of the second UE, where the first UE is currently located in a home network.

According to a thirteenth aspect, a location manager entity LM is provided, where the LM is a home location manager entity H-LM of second user equipment UE, and includes: a receiving unit, configured to receive a route request message sent by a first mobile router MR in which first UE is currently located, where the route request message includes an Internet Protocol IP address of the first UE; and a sending unit, configured to send a route response message to the first MR, where the route response message includes flag bit information, and the flag bit information is used to indicate that a second MR in which the second UE is currently located is a home mobile router H-MR of the second UE, so that the first MR terminates a route optimization process, where the first UE is currently located in a home network.

According to the embodiments of the present invention, a forwarding tunnel is established between MRs in visited networks, so that data is transmitted over the forwarding tunnel, which can reduce route redundancy.

### BRIEF DESCRIPTION OF DRAWINGS

To describe the technical solutions in the embodiments of the present invention more clearly, the following briefly describes the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.
FIG. 1 is a schematic diagram of a mobility management architecture according to an embodiment of the present invention;
FIG. 2 is a flowchart of a route optimization method according to an embodiment of the present invention;
FIG. 3 is a flowchart of a route optimization method according to another embodiment of the present invention;
FIG. 4 is a flowchart of a route optimization method according to another embodiment of the present invention;
FIG. 5 is a flowchart of a route optimization method according to another embodiment of the present invention;
FIG. 6 is a flowchart of a route optimization method according to another embodiment of the present invention;
FIG. 7 is a flowchart of a route optimization method according to another embodiment of the present invention;
FIG. 8 is a flowchart of a route optimization method according to another embodiment of the present invention;
FIG. 9 is a schematic flowchart of a route optimization process according to an embodiment of the present invention;
FIG. 10 is a schematic flowchart of a route optimization process according to another embodiment of the present invention;
FIG. 11 is a schematic flowchart of a route optimization process according to another embodiment of the present invention;
FIG. 12 is a schematic flowchart of a route optimization process according to another embodiment of the present invention;
FIG. 13 is a schematic flowchart of a route optimization process according to another embodiment of the present invention;
FIG. 14 is a flowchart of a route optimization method according to another embodiment of the present invention;
FIG. 15 is a flowchart of a route optimization method according to another embodiment of the present invention;
FIG. 16 is a schematic flowchart of a route optimization process according to another embodiment of the present invention;
FIG. 17 is a flowchart of a route optimization method according to another embodiment of the present invention;
FIG. 18 is a flowchart of a route optimization method according to another embodiment of the present invention;
FIG. 19 is a schematic flowchart of a route optimization process according to another embodiment of the present invention;
FIG. 20 is a block diagram of a mobile router according to an embodiment of the present invention;
FIG. 21 is a block diagram of a mobile router according to another embodiment of the present invention;
FIG. 22 is a block diagram of a location manager entity according to another embodiment of the present invention;
FIG. 23 is a block diagram of a mobile router according to another embodiment of the present invention;
FIG. 24 is a block diagram of a location manager entity according to another embodiment of the present invention;
FIG. 25 is a block diagram of a mobile router according to another embodiment of the present invention;
FIG. 26 is a block diagram of a location manager entity according to another embodiment of the present invention;
FIG. 27 is a block diagram of a mobile router according to another embodiment of the present invention;
FIG. 28 is a block diagram of a mobile router according to another embodiment of the present invention;
FIG. 29 is a block diagram of a location manager entity according to another embodiment of the present invention;
FIG. 30 is a block diagram of a mobile router according to another embodiment of the present invention;
FIG. 31 is a block diagram of a location manager entity according to another embodiment of the present invention;
FIG. 32 is a block diagram of a mobile router according to another embodiment of the present invention; and
FIG. 33 is a block diagram of a location manager entity according to another embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

It should be understood that in the embodiments of the present invention, user equipment (User Equipment, UE) is also referred to as a terminal, and includes but is not limited to a mobile station (Mobile Station, MS), a mobile terminal (Mobile Terminal), a mobile telephone (Mobile Telephone), a mobile node (Mobile Node, MN), a handset (handset), portable equipment (portable equipment), and the like. The UE may communicate with one or more core networks by using a radio access network (RAN, Radio Access Network). For example, the user equipment may be a mobile telephone (or referred to as a "cellular" telephone), or a computer that has a communication function. The UE may further be a portable, pocket-sized, handheld, computer built-in, or in-vehicle mobile apparatus.

It should be understood that the embodiments of the present invention are not only applicable to independent mobility management, but also applicable to centralized mobility management and distributed mobility management.

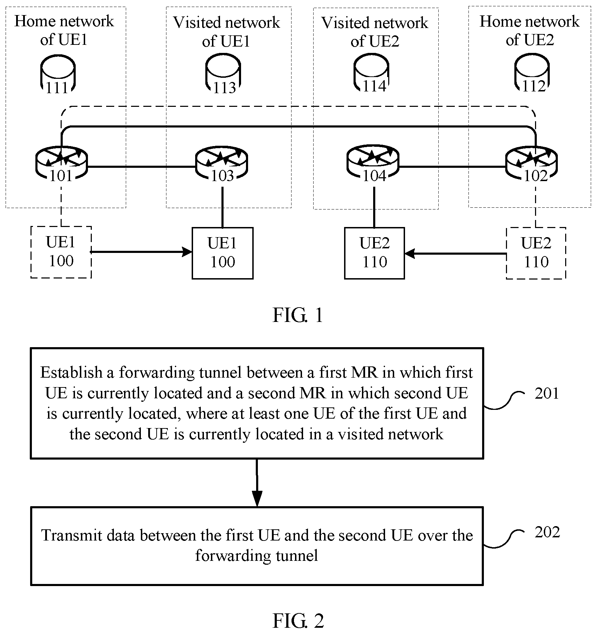

FIG. 1 is a schematic diagram of a mobility management architecture according to an embodiment of the present invention. In mobility management two logical entities are includes: an MR and a location manager entity (Location management LM). Main functions of the MR are intercepting a packet of UE, and forwarding the packet to a correct destination. Main functions of the LM are managing and tracking a location of the UE, so that the MR can route the packet of the UE to a correct address.

FIG. 1 shows a scenario of independent mobility management. 101, 102, 103, and 104 in FIG. 1 represent MRs, and 111, 112, 113, and 114 in FIG. 1 represent LMs. Each MR corresponds to one LM, and different LMs have different addresses. Specifically, the MR 101 and the LM 111 are located in a home network of UE1 100, the MR 102 and the LM 112 are located in a home network of UE2 110, the MR 103 and the LM 113 are located in a visited network of the UE1 100, and the MR 104 and the LM 114 are located in a visited network of the UE2 110. When the UE1 100 and the UE2 110 are respectively located in the home network of the UE1 100 and the home network of the UE2 110, a data transmission path from the UE1 100 to the UE2 110 is the UE1 100, the MR101, the MR 102, and the UE2 110, as shown by a dashed line in FIG. 1.

When the UE1 100 moves to the visited network in which the MR 103 and the LM 113 are located, a forwarding tunnel is established between the MR 103 in the visited network and the MR 101 in the home network. Similarly, when the UE2 110 moves to the visited network in which the MR 104 and the LM 114 are located, a forwarding tunnel is also established between the MR 104 in the visited network and the MR 102 in the home network. In this case, a data transmission path from the UE1 100 to the UE2 110 is the UE1 100, the MR 103, the MR 101, the MR 102, the MR 104, and the UE2 110, as shown by a solid line in FIG. 1. That is, all data transmitted between the UE1 100 and the UE2 110 needs to pass through the home network, which directly causes a problem of route redundancy.

For ease of description, in the embodiments of the present invention, first UE is used as a transmit end, and second UE is used as a receive end, that is, the second UE is a correspondent node (Correspondent Node, CN) of the first UE.

FIG. 2 is a flowchart of a route optimization method according to an embodiment of the present invention. The method shown in FIG. 2 includes:
201. Establish a forwarding tunnel between a first MR in which first UE is currently located and a second MR in which second UE is currently located, where at least one UE of the first UE and the second UE is currently located in a visited network.
202. Transmit data between the first UE and the second UE over the forwarding tunnel.

According to this embodiment of the present invention, a forwarding tunnel is established between MRs in visited networks, so that data is transmitted over the forwarding tunnel, which can reduce route redundancy.

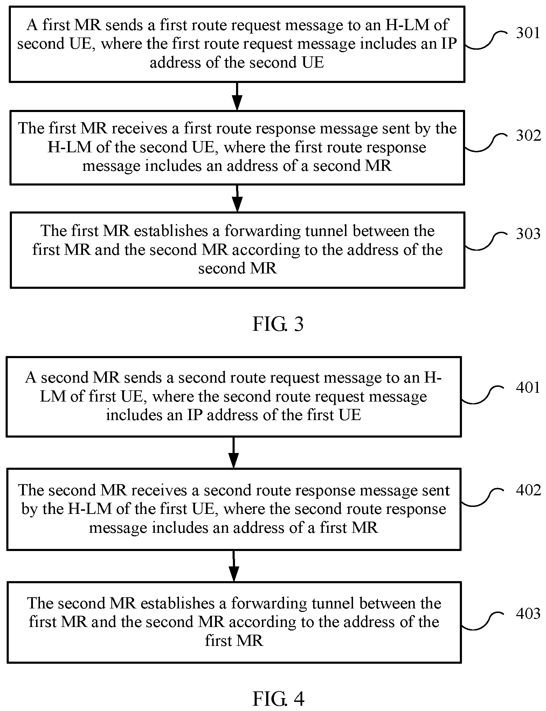

In step 201, the first MR may trigger to establish the forwarding tunnel between the first MR and the second MR, or the second MR may trigger to establish the forwarding tunnel between the first MR and the second MR. A method for establishing the forwarding tunnel is shown in FIG. 3 to FIG. 6.

FIG. 3 is a flowchart of a route optimization method according to another embodiment of the present invention. The method shown in FIG. 3 includes:
301. A first MR sends a first route request message to a home location manager entity (Home Location manager, H-LM) of second UE, where the first route request message includes an Internet Protocol (Internet Protocol, IP) address of the second UE.

Optionally, in an embodiment, before step 301, the first MR receives a packet sent by first UE, the first MR acquires a destination address of the packet, that is, the IP address of the second UE, and then the first MR buffers the packet, so that the packet is transmitted to the second UE over a forwarding tunnel after step 303.

In this way, according to the IP address of the second UE, the first MR may determine that an LM corresponding to the IP address of the second UE is the H-LM of the second UE. In addition, in step 301, the first MR may send the first route request message to the H-LM of the second UE.

Optionally, in another embodiment, when the first UE is currently located in a visited network, the first MR is a current mobile router (Current Mobile Router, C-MR) of the first UE, that is, the first MR is an MR in the visited network in which the first UE is located, and it is assumed that an H-MR of the first UE is a third MR. Before step 301, the first MR receives the packet sent by the first UE, the first MR acquires a destination address of the packet, that is, the IP address of the second UE, then the first MR may send the packet to the third MR, and the third MR routes the packet to the second UE. Specifically, when the first UE moves from a home network to the visited network, a first forwarding tunnel is first established between the first MR and the third MR, so that data is transmitted between the first MR and the third MR.

Optionally, in another embodiment, when the first UE is currently located in a home network, the first MR is a home mobile router (Home Mobile Router, H-MR) of the first UE. In step 301, the first route request message sent by the first MR may include first flag bit information, and the first flag bit information is used to indicate that the first MR is the H-MR of the first UE, that is, the first flag bit information is used to indicate that the first UE is currently located in the home network.

302. The first MR receives a first route response message sent by the H-LM of the second UE, where the first route response message includes an address of a second MR.

Optionally, in an embodiment, when the second UE is currently located in a visited network, the second MR is a C-MR of the second UE, that is, the second MR is an MR in the visited network in which the second UE is located.

Optionally, in another embodiment, when the first UE is currently located in a visited network and the second UE is currently located in a home network, the second MR is an H-MR of the second UE.

Optionally, in another embodiment, when the first UE is currently located in a visited network and the second UE is currently located in a home network, in step 302, the first route response message may further include second flag bit information, and the second flag bit information is used to indicate that the second MR is an H-MR of the second UE, that is, the second flag bit information is used to indicate that the second UE is currently located in the home network.

303. The first MR establishes a forwarding tunnel between the first MR and the second MR according to the address of the second MR.

Optionally, in an embodiment, when the first route response message received by the first MR in step 302 includes the second flag bit information and the second flag bit information indicates that the second UE is currently located in the home network, the first MR needs to first determine that the first UE is currently located in the visited network, and then establish the forwarding tunnel between the first MR and the second MR.

Optionally, in an embodiment, in step 303, the first MR may send a first tunnel establishment request message to the second MR, and the first MR may receive a first tunnel establishment response message sent by the second MR, so as to complete establishing the forwarding tunnel.

Optionally, in an embodiment, in step 303, the first MR may establish the forwarding tunnel between the first MR and the second MR according to the General Packet Radio Service Tunneling Protocol (General Packet Radio Service Tunneling Protocol, GTP). Specifically, the first tunnel establishment request message is a carrier request message, and the first tunnel establishment response message is a carrier response message.

Optionally, in an embodiment, in step 303, the first MR may establish the forwarding tunnel between the first MR and the second MR according to the Proxy Mobile Internet Protocol (Proxy Mobile Internet Protocol, PMIP). Specifically, the first tunnel establishment request message is a proxy binding update message, and the first tunnel establishment response message is a proxy binding confirmation message.

Optionally, in another embodiment, in step 303, the first MR may establish the forwarding tunnel in another manner, which is not limited in the present invention.

Optionally, in an embodiment, after step 303, the first MR routes and sends the buffered packet to the second MR over the forwarding tunnel established in step 303, and the packet is finally transmitted to the second UE.

Optionally, in another embodiment, after step 303, the first MR routes a received subsequent packet to the second UE over the forwarding tunnel established in step 303.

Optionally, after step 303, the first MR may bind the following information: an IP address of the first UE, the IP address of the second UE, the address of the second MR, and tunnel information of the forwarding tunnel. The present invention sets no limitation on a form of binding the information. For example, the information may be stored in the first MR in a form of a binding list.

According to this embodiment of the present invention, a forwarding tunnel is established between MRs in visited networks, so that data is transmitted over the forwarding tunnel, which can reduce route redundancy.

FIG. 4 is a flowchart of a route optimization method according to another embodiment of the present invention. The method shown in FIG. 4 includes:
401. A second MR sends a second route request message to an H-LM of first UE, where the second route request message includes an IP address of the first UE.

Optionally, in an embodiment, when second UE is currently located in a visited network, the second MR is a C-MR of the second UE, that is, the second MR is an MR in the visited network in which the second UE is located, and it is assumed that an H-MR of the second UE is a fourth MR. Before step 401, when the second UE moves from a home network to the visited network, a second forwarding tunnel is first established between the second MR and the fourth MR, so that data is transmitted between the second MR and the fourth MR.

402. The second MR receives a second route response message sent by the H-LM of the first UE, where the second route response message includes an address of a first MR.

Optionally, in an embodiment, when the first UE is currently located in a visited network, the first MR is a C-MR of the first UE, that is, the first MR is an MR in the visited network in which the first UE is located.

Optionally, in another embodiment, when the second UE is currently located in a visited network and the first UE is currently located in a home network, the first MR is an H-MR of the first UE.

403. The second MR establishes a forwarding tunnel between the first MR and the second MR according to the address of the first MR.

Optionally, in an embodiment, in step 403, the second MR may send a second tunnel establishment request message to the first MR, and the second MR may receive a second tunnel establishment response message sent by the first MR, so as to complete establishing the forwarding tunnel.

Optionally, in an embodiment, in step 403, the second MR may establish the forwarding tunnel between the first MR and the second MR according to the GTP. Specifically, the second tunnel establishment request message is a carrier request message, and the second tunnel establishment response message is a carrier response message.

Optionally, in another embodiment, in step 403, the second MR may establish the forwarding tunnel between the first MR and the second MR according to the PMIP. Specifically, the second tunnel establishment request message is a proxy binding update message, and the second tunnel establishment response message is a proxy binding confirmation message.

Optionally, in another embodiment, in step 403, the second MR may establish the forwarding tunnel in another manner, which is not limited in the present invention.

Optionally, after step 403, the second MR binds the following information: the IP address of the first UE, an IP address of the second UE, the address of the first MR, and tunnel information of the forwarding tunnel. The present invention sets no limitation on a form of binding the information. For example, the information may be stored in the second MR in a form of a binding list.

According to this embodiment of the present invention, a forwarding tunnel is established between MRs in visited networks, so that data is transmitted over the forwarding tunnel, which can reduce route redundancy.

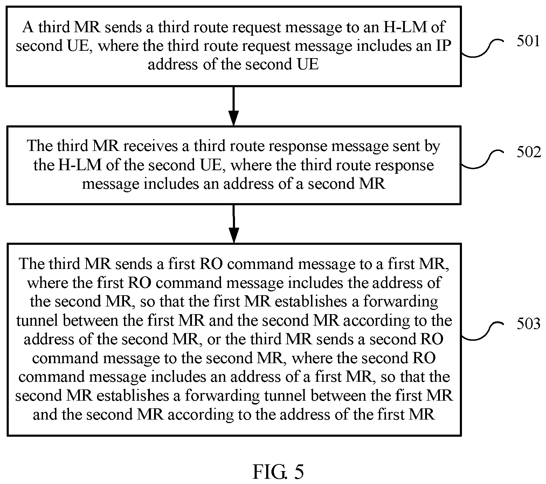

FIG. 5 is a flowchart of a route optimization method according to another embodiment of the present invention. When first UE is currently located in a visited network, a first MR is a C-MR of the first UE, that is, the first MR is an MR in the visited network in which the first UE is located, and it is assumed that an H-MR of the first UE is a third MR. The method shown in FIG. 5 includes:
501. The third MR sends a third route request message to an H-LM of second UE, where the third route request message includes an IP address of the second UE.
502. The third MR receives a third route response message sent by the H-LM of the second UE, where the third route response message includes an address of the second MR.

Optionally, in an embodiment, when the second UE is currently located in a visited network, the second MR is a C-MR of the second UE, that is, the second MR is an MR in the visited network in which the second UE is located.

Optionally, in another embodiment, when the second UE is currently located in a home network, the second MR is an H-MR of the second UE.

503. The third MR sends a first route optimization (Router Optimization, RO) command message to the first MR, where the first RO command message includes the address of the second MR, so that the first MR establishes a forwarding tunnel between the first MR and the second MR according to the address of the second MR, or the third MR sends a second RO command message to the second MR, where the second RO command message includes an address of the first MR, so that the second MR establishes a forwarding tunnel between the first MR and the second MR according to the address of the first MR.

Optionally, in an embodiment, the first RO command message may further include an IP address of the first UE and the IP address of the second UE. For a specific manner of establishing, by the first MR, the forwarding tunnel between the first MR and the second MR according to the address of the second MR, reference may be made to the description about step 303 in FIG. 3. To avoid repetition, details are not repeated herein.

Optionally, in another embodiment, the second RO command message may further include an IP address of the first UE and the IP address of the second UE. For a specific manner of establishing, by the second MR, the forwarding tunnel between the first MR and the second MR according to the address of the first MR, reference may be made to the description about step 403 in FIG. 4. To avoid repetition, details are not repeated herein.

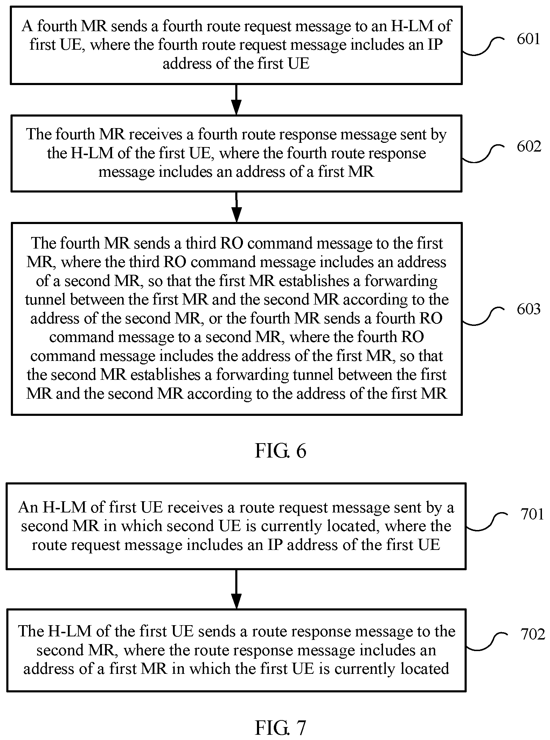

FIG. 6 is a flowchart of a route optimization method according to another embodiment of the present invention. When second UE is currently located in a visited network, a second MR is a C-MR of the second UE, that is, the second MR is an MR in the visited network in which the second UE is located, and it is assumed that an H-MR of the second UE is a fourth MR. The method shown in FIG. 6 includes:
601. The fourth MR sends a fourth route request message to an H-LM of first UE, where the fourth route request message includes an IP address of the first UE.
602. The fourth MR receives a fourth route response message sent by the H-LM of the first UE, where the fourth route response message includes an address of a first MR.

Optionally, in an embodiment, when the first UE is currently located in a visited network, the first MR is a C-MR of the first UE, that is, the first MR is an MR in the visited network in which the first UE is located.

Optionally, in another embodiment, when the first UE is currently located in a home network, the first MR is an H-MR of the first UE.

603. The fourth MR sends a third RO command message to the first MR, where the third RO command message includes an address of the second MR, so that the first MR establishes a forwarding tunnel between the first MR and the second MR according to the address of the second MR, or the fourth MR sends a fourth RO command message to the second MR, where the fourth RO command message includes the address of the first MR, so that the second MR establishes a forwarding tunnel between the first MR and the second MR according to the address of the first MR.

Optionally, in an embodiment, the third RO command message may further include the IP address of the first UE and an IP address of the second UE. For a specific manner of establishing, by the first MR, the forwarding tunnel between the first MR and the second MR according to the address of the second MR, reference may be made to the description about step 303 in FIG. 3. To avoid repetition, details are not repeated herein.

Optionally, in another embodiment, the fourth RO command message may further include the IP address of the first UE and an IP address of the second UE. For a specific manner of establishing, by the second MR, the forwarding tunnel between the first MR and the second MR according to the address of the first MR, reference may be made to the description about step 403 in FIG. 4. To avoid repetition, details are not repeated herein.

In this way, step 201 in FIG. 2 may be implemented according to any method shown in FIG. 3 to FIG. 6. Optionally, in an embodiment, after the forwarding tunnel is established between the first MR and the second MR, the first MR may bind the following information: the IP address of the first UE, the IP address of the second UE, the address of the second MR, and tunnel information of the forwarding tunnel. The second MR may bind the following information: the IP address of the first UE, the IP address of the second UE, the address of the first MR, and tunnel information of the forwarding tunnel. It should be noted that the bound information in this embodiment of the present invention may be stored in a form of a binding list, or may be stored in another form, which is not limited in this embodiment of the present invention.

Optionally, in another embodiment, after the forwarding tunnel is established between the first MR and the second MR, when the first UE or the second UE moves, so that the first UE is not located within a service range of the first MR or the second UE is not located within a service range of the second MR, the bound information in the first MR and the second MR may be unbound. Still further, if the forwarding tunnel is not shared by the first UE and the second UE with another user, the first MR or the second MR may trigger to release the forwarding tunnel.

Specifically, the first MR may trigger to release the forwarding tunnel, which includes: sending, by the first MR, a first tunnel release request message to the second MR, and receiving, by the first MR, a first tunnel release response message sent by the second MR, so as to complete releasing the forwarding tunnel. Correspondingly, in FIG. 3 to FIG. 6, if the first MR or the second MR establishes the forwarding tunnel between the first MR and the second MR according to the GTP, the first tunnel release request message is a carrier deletion request message, and the first tunnel release response message is a carrier deletion response message. Correspondingly, in FIG. 3 to FIG. 6, if the first MR or the second MR establishes the forwarding tunnel between the first MR and the second MR according to the PMIP, the first tunnel release request message is a binding cancellation indication message, and the first tunnel release response message is a binding cancellation confirmation message.

Specifically, the second MR may trigger to release the forwarding tunnel, which includes: sending, by the second MR, a second tunnel release request message to the first MR, and receiving, by the second MR, a second tunnel release response message sent by the first MR, so as to complete releasing the forwarding tunnel. Correspondingly, in FIG. 3 to FIG. 6, if the first MR or the second MR establishes the forwarding tunnel between the first MR and the second MR according to the GTP, the second tunnel release request message is a carrier deletion request message, and the second tunnel release response message is a carrier deletion response message. Correspondingly, in FIG. 3 to FIG. 6, if the first MR or the second MR establishes the forwarding tunnel between the first MR and the second MR according to the PMIP, the second tunnel release request message is a binding cancellation indication message, and the second tunnel release response message is a binding cancellation confirmation message.

FIG. 7 is a flowchart of a route optimization method according to another embodiment of the present invention. At least one UE in first UE and second UE is currently located in a visited network. The method shown in FIG. 7 includes:
701. An H-LM of the first UE receives a route request message sent by a second MR in which the second UE is currently located, where the route request message includes an IP address of the first UE.

Optionally, in an embodiment, when the second UE is currently located in a home network, the route request message may further include first flag bit information, and the first flag bit information is used to indicate that the second MR is an H-MR of the second UE.

702. The H-LM of the first UE sends a route response message to the second MR, where the route response message includes an address of a first MR in which the first UE is currently located.

Optionally, in an embodiment, when the first UE is currently located in a home network, the route response message may further include second flag bit information, and the second flag bit information is used to indicate that the first MR is an H-MR of the first UE.

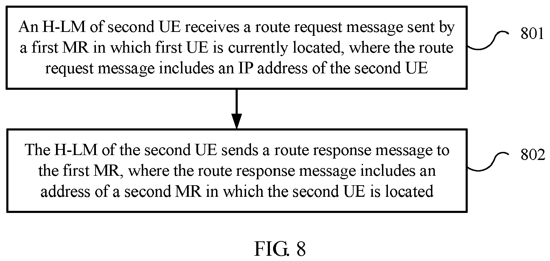

FIG. 8 is a flowchart of a route optimization method according to another embodiment of the present invention. At least one UE in first UE and second UE is currently located in a visited network. The method shown in FIG. 8 includes:
801. An H-LM of the second UE receives a route request message sent by a first MR in which the first UE is currently located, where the route request message includes an IP address of the second UE.

Optionally, in an embodiment, when the first UE is currently located in a home network, the first MR is an H-MR of the first UE, and the route request message may include first flag bit information, and the first flag bit information is used to indicate that the first MR is the H-MR of the first UE, that is, the first flag bit information is used to indicate that the first UE is currently located in the home network.

802. The H-LM of the second UE sends a route response message to the first MR, where the route response message includes an address of a second MR in which the second UE is located.

Optionally, in another embodiment, when the first UE is currently located in a visited network and the second UE is currently located in a home network, the route response message may further include second flag bit information, and the second flag bit information is used to indicate that the second MR is an H-MR of the second UE, that is, the second flag bit information is used to indicate that the second UE is currently located in the home network.

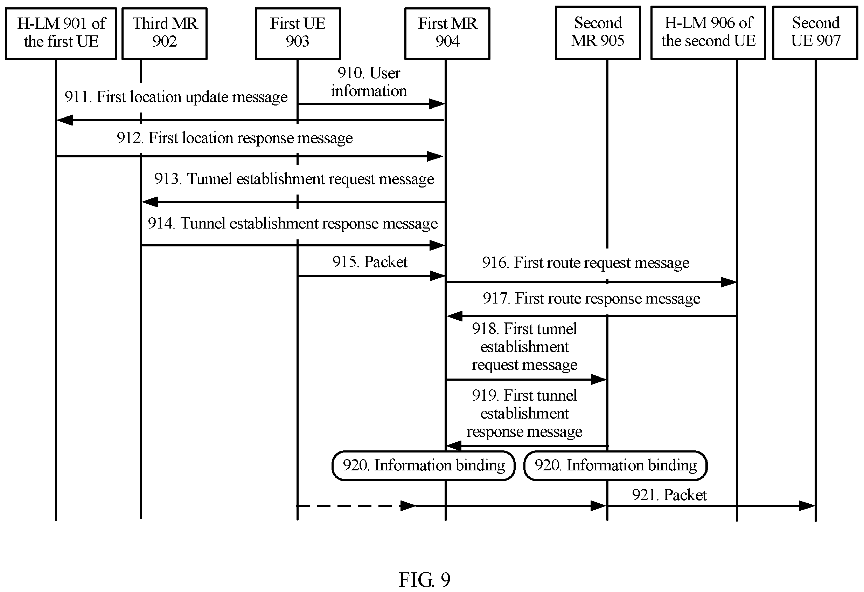

FIG. 9 is a schematic flowchart of a route optimization process according to an embodiment of the present invention. In FIG. 9, first UE 903 is currently located in a visited network, and second UE 907 is currently located in a home network. A first MR 904 is a C-MR of the first UE 903, a second MR 905 is an H-MR of the second UE 907, and a third MR 902 is an H-MR of the first UE 903. A process shown in FIG. 9 includes:
910. When the first UE 903 moves from a home network to the visited network, the first MR 904 in the visited network acquires user information of the first UE 903, where the user information includes an IP address of the first UE 903.
911. The first MR 904 sends a first location update message to an H-LM 901 of the first UE, where the first location update message includes the IP address of the first UE 903 and an address of the first MR 904.
912. After receiving the first location update message, the H-LM 901 of the first UE records the address of the first MR 904 in the first location update message, and sends a first location response message to the first MR 904, where the first location response message includes an address of the third MR 902.
913. The first MR 904 triggers to establish a first forwarding tunnel between the first MR 904 and the third MR 902, and the first MR 904 sends a tunnel establishment request message to the third MR 902.
914. The first MR 904 receives a tunnel establishment response message sent by the third MR 902, so as to complete establishing the first forwarding tunnel between the first MR 904 and the third MR 902.

Optionally, in an embodiment, the first MR 904 may establish the first forwarding tunnel between the first MR 904 and the third MR 902 according to the GTP. The tunnel establishment request message in step 913 is a carrier request message, and the tunnel establishment response message in step 914 is a carrier response message.

Optionally, in another embodiment, the first MR 904 may establish the first forwarding tunnel between the first MR 904 and the third MR 902 according to the PMIP. The tunnel establishment request message in step 913 is a proxy binding update message, and the tunnel establishment response message in step 914 is a proxy binding confirmation message.

It should be noted that in step 911 to step 914 in this embodiment of the present invention, the method for establishing the first forwarding tunnel between the first MR 904 and the third MR 902 may be implemented in another form, which is not limited in this embodiment of the present invention.

915. The first UE 903 sends a packet to the first MR 904, and the first MR 904 acquires a destination address of the packet, that is, an IP address of the second UE.

Specifically, after receiving the packet, the first MR 904 acquires a source address and the destination address of the packet, which are respectively the IP address of the first UE 903 and the IP address of the second UE 907. The first MR 904 finds no tunnel information that is bound to the IP address of the first UE 903 and the IP address of the second UE 907, and the IP address of the first UE 903 is not allocated by the visited network in which the first MR 904 is located. In this case, the first MR 904 buffers the packet in the first MR 904.

Optionally, in another embodiment, the first MR 904 sends the packet to the third MR 902 over the first forwarding tunnel between the first MR 904 and the third MR 902, so that the third MR 902 sends the packet to the second UE 907 by using the second MR 905.

916. The first MR 904 sends a first route request message to an H-LM 906 of the second UE, where the first route request message includes the IP address of the second UE 907.

Optionally, in an embodiment, in a case of independent mobility management, each MR corresponds to one LM, and each LM has a different address. In this case, according to the IP address of the second UE 907, the first MR 904 can determine that an LM corresponding to the IP address of the second UE 907 is the H-LM 906 of the second UE.

Optionally, in another embodiment, in a case of centralized mobility management, only one LM exists, and therefore, an LM corresponding to the first MR 904 is also the H-LM of the second UE.

Optionally, in another embodiment, in a case of distributed mobility management, different LMs corresponding to different MRs are interconnected. That is, for an MR, different LMs are equivalent to one LM, which is similar to the case of centralized mobility management.

917. The first MR 904 receives a first route response message sent by the H-LM 906 of the second UE, where the first route response message includes an address of the second MR 905.

Optionally, in an embodiment, the first route response message may further include second flag bit information, and the second flag bit information is used to indicate that the second MR 905 is the H-MR of the second UE 907, that is, the second UE 907 is currently located in the home network.

918. The first MR 904 triggers to establish a forwarding tunnel between the first MR 904 and the second MR 905, and the first MR 904 sends a first tunnel establishment request message to the second MR 905.

Optionally, in an embodiment, the first route response message received by the first MR 904 includes second flag bit information, that is, the first MR 904 has learned that the second UE 907 is currently located in the home network, and therefore, the first MR 904 needs to first determine that the first UE 903 is currently located in the visited network, and then trigger to establish the forwarding tunnel between the first MR 904 and the second MR 905.

919. The first MR 904 receives a first tunnel establishment response message sent by the second MR 905, so as to complete establishing the forwarding tunnel.

Optionally, in an embodiment, the first MR 904 may establish the forwarding tunnel between the first MR 904 and the second MR 905 according to the GTP. The first tunnel establishment request message in step 918 is a carrier request message, and the first tunnel establishment response message in step 919 is a carrier response message.

Optionally, in another embodiment, the first MR 904 may establish the forwarding tunnel between the first MR 904 and the second MR 905 according to the PMIP, the first tunnel establishment request message in step 918 is a proxy binding update message, and the first tunnel establishment response message in step 919 is a proxy binding confirmation message.

920. The first MR 904 binds the following information: the IP address of the first UE, the IP address of the second UE, the address of the second MR 905, and tunnel information of the forwarding tunnel, and the second MR 905 binds the following information: the IP address of the first UE, the IP address of the second UE, the address of the first MR 904, and the tunnel information of the forwarding tunnel.

Optionally, in an embodiment, the information bound by the first MR 904 may be stored in the first MR 904 in a form of a binding list. Table 1 shows a binding list that is stored by the first MR 904 and uses the IP address of the first UE as an index. The information bound by the second MR 905 may be stored in the second MR 905 in a form of a binding list. Table 2 shows a binding list that is stored by the second MR 905 and uses the IP address of the second UE as an index.

**Table 1**

| **IP address of the first UE** | | |
|---|---|---|
| IP address of the second UE | Address of the second MR | Tunnel information of the forwarding tunnel |

**Table 2**

| **IP address of the second UE** | | |
|---|---|---|
| IP address of the first UE | Address of the first MR | Tunnel information of the forwarding tunnel |

Optionally, in another embodiment, alternatively, the bound information may be stored in another form, which is not limited in the present invention.

Optionally, in another embodiment, if the forwarding tunnel is shared by the first UE 903 and the second UE 907 with other users, for example, other sharing users are third UE and fourth UE, the bound information may be stored in a form of a binding list. Table 3 shows a binding list that is stored by the first MR 904 and uses the address of the second MR 905 and the tunnel information of the forwarding tunnel as an index. The first row of Table 3 represents the index of the table, and two columns of other rows are a source address/destination address pair; for example, the first column represents a source address and the second column represents a destination address, or the first column represents a destination address and the second column represents a source address. Table 4 shows a binding list that is stored by the second MR 905 and uses the address of the first MR 904 and the tunnel information of the forwarding tunnel as an index. The first row of Table 4 represents the index of the table, and two columns of other rows are a source address/destination address pair; for example, the first column represents a source address and the second column represents a destination address, or the first column represents a destination address and the second column represents a source address.

**Table 3**

| **Address of the second MR** | **Tunnel information of the forwarding tunnel** |
|---|---|
| IP address of the first UE | IP address of the second UE |
| IP address of the third UE | IP address of the fourth UE |
| ... | ... |

**Table 4**

| **Address of the first MR** | **Tunnel information of the forwarding tunnel** |
|---|---|
| IP address of the first UE | IP address of the second UE |
| IP address of the third UE | IP address of the fourth UE |
| ... | ... |

921. Transmit, to the second UE 907 over the forwarding tunnel, a subsequent packet sent by the first UE 903.

Specifically, the subsequent packet sent by the first UE 903 arrives at the first MR 904, and is transmitted to the second MR 905 over the forwarding tunnel, and is finally transmitted to the second UE 907.

Optionally, in an embodiment, after the first MR 904 buffers the packet in step 915, and after step 919, the first MR 904 transmits the buffered packet to the second MR 905 over the forwarding tunnel, and finally the packet is transmitted to the second UE 907.

According to this embodiment of the present invention, a forwarding tunnel is established between MRs in visited networks, so that data is transmitted over the forwarding tunnel, which can reduce route redundancy.

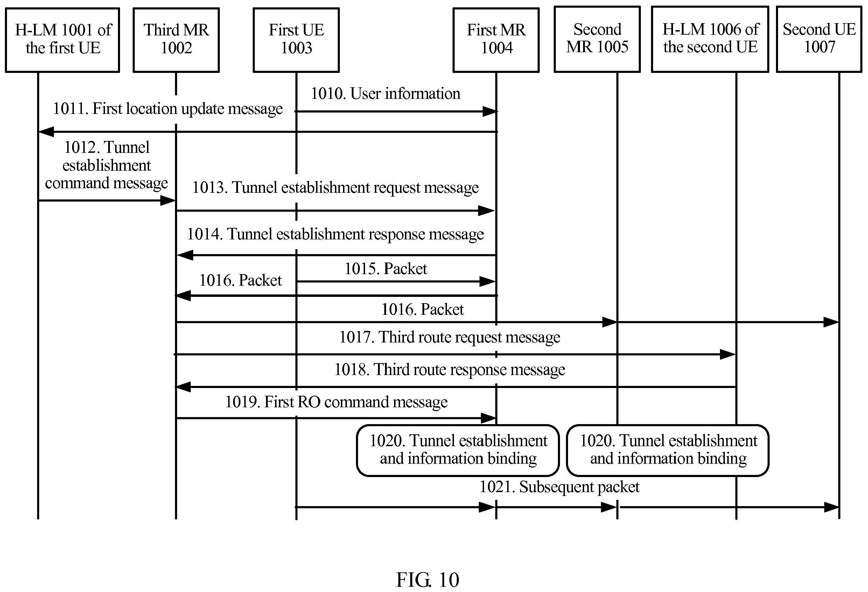

FIG. 10 is a schematic flowchart of a route optimization process according to another embodiment of the present invention. In FIG. 10, first UE 1003 is currently located in a visited network, and second UE 1007 is currently located in a home network. A first MR 1004 is a C-MR of the first UE 1003, a second MR 1005 is an H-MR of the second UE 1007, and a third MR 1002 is an H-MR of the first UE 1003. A process shown in FIG. 10 includes:
1010. When the first UE 1003 moves from a home network to the visited network, the first MR 1004 in the visited network acquires user information of the first UE 1003, where the user information includes an IP address of the first UE 1003.

Specifically, the IP address of the first UE 1003 is allocated by the home network of the first UE 1003.

1011. The first MR 1004 sends a first location update message to an H-LM 1001 of the first UE, where the first location update message includes the IP address of the first UE 1003 and an address of the first MR 1004.

1012. After receiving the first location update message, the H-LM 1001 of the first UE records the address of the first MR 1004 in the first location update message, and sends a tunnel establishment command message to the third MR 1002, where the tunnel establishment command message includes the address of the first MR 1004.

1013. After receiving the tunnel establishment command message sent by the H-LM 1001 of the first UE, the third MR 1002 triggers to establish a first forwarding tunnel between the first MR 1004 and the third MR 1002, and the third MR 1002 sends a tunnel establishment request message to the first MR 1004.

1014. The third MR 1002 receives a tunnel establishment response message sent by the first MR 1004, so as to complete establishing the first forwarding tunnel between the first MR 1004 and the third MR 1002.

Optionally, in an embodiment, the third MR 1002 may establish the first forwarding tunnel between the first MR 1004 and the third MR 1002 according to the GTP. The tunnel establishment request message in step 1013 is a carrier request message, and the tunnel establishment response message in step 1014 is a carrier response message.

Optionally, in another embodiment, the third MR 1002 may establish the first forwarding tunnel between the first MR 1004 and the third MR 1002 according to the PMIP. The tunnel establishment request message in step 1013 is a proxy binding update message, and the tunnel establishment response message in step 1014 is a proxy binding confirmation message.

It should be noted that establishment of the first forwarding tunnel between the first MR 1004 and the third MR 1002 may be implemented according to the method in step 1011 to step 1014 in this embodiment of the present invention, or may be implemented according to the method in step 911 to step 914 shown in FIG. 9, or may be implemented in another form, which is not limited in the present invention.

1015. The first UE 1003 sends a packet to the first MR 1004.

1016. The first MR 1004 sends the packet to the third MR 1002, so that the third MR 1002 routes the packet to the second UE 1007 by using the second MR 1005.

Specifically, in step 1015, after receiving the packet, the first MR 1004 acquires a source address and a destination address of the packet, which are respectively the IP address of the first UE 1003 and an IP address of the second UE 1007. The first MR 1004 finds no tunnel information that is bound to the IP address of the first UE 1003 and the IP address of the second UE 1007, and the IP address of the first UE 1003 is not allocated by the visited network in which the first MR 1004 is located. In this case, the first MR 1004 forwards the packet to the third MR 1002, and then the third MR 1002 routes the received packet to the destination address, that is, the second UE 1007.

1017. The third MR 1002 initiates a route optimization process, the third MR 1002 sends a third route request message to an H-LM 1006 of the second UE, where the third route request message includes an IP address of the second UE.

1018. The third MR 1002 receives a third route response message sent by the H-LM 1006 of the second UE, where the third route response message includes an address of the second MR 1005.

1019. The third MR 1002 sends a first RO command message to the first MR 1004, where the first RO command message includes the IP address of the first UE 1003, the IP address of the second UE 1007, and the address of the second MR 1005.

1020. The first MR 1004 receives the first RO command message and triggers to establish a forwarding tunnel between the first MR 1004 and the second MR 1005, and then the first MR 1004 and the second MR 1005 bind information.

Specifically, for step 1020, reference may be made to steps 918 to 920 in FIG. 9. To avoid repetition, details are not repeated herein.

Optionally, in an embodiment, in step 1019, the third MR 1002 may also send a second RO command message to the second MR 1005, where the second RO command message includes the IP address of the first UE 1003, the IP address of the second UE 1007, and the address of the first MR 1004. In addition, in step 1020, the second MR 1005 triggers to establish a forwarding tunnel between the first MR 1004 and the second MR 1005. Specifically, the second MR 1005 sends a second tunnel establishment request message to the first MR 1004, and the second MR 1005 receives a second tunnel establishment response message sent by the first MR 1004, so as to complete establishing the forwarding tunnel between the first MR 1004 and the second MR 1005.

1021. After arriving at the first MR 1004, a subsequent packet sent by the first UE 1003 is directly sent to the second MR 1005 over the forwarding tunnel, and is finally transmitted to the second UE 1007.

It should be noted that the embodiments shown in FIG. 9 and FIG. 10 are not only applicable to a scenario in which the first UE is currently located in the visited network and the second UE is currently located in the home network, but also applicable to a scenario in which both the first UE and the second UE are currently located in visited networks. To avoid repetition, details are not repeated herein.

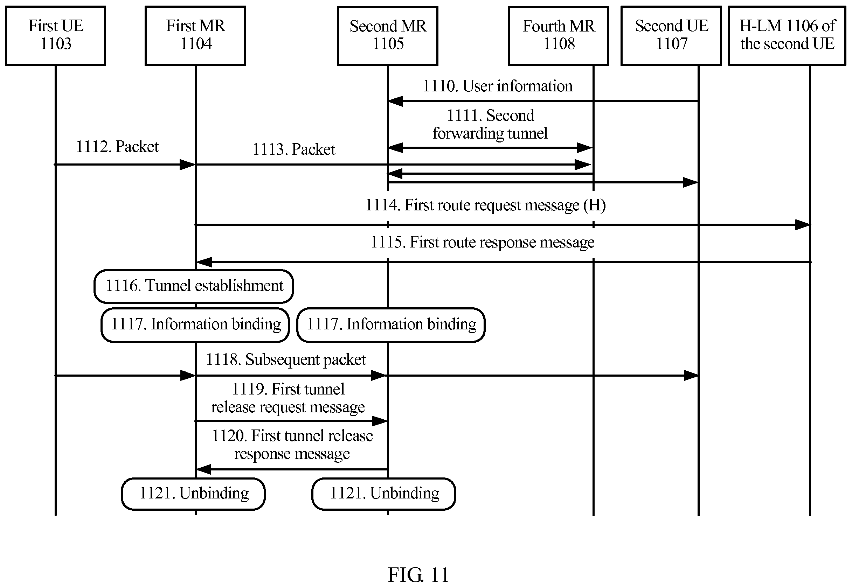

FIG. 11 is a schematic flowchart of a route optimization process according to another embodiment of the present invention. In FIG. 11, first UE 1103 is currently located in a home network, and second UE 1107 is currently located in a visited network. A first MR 1104 is an H-MR of the first UE 1103, a second MR 1105 is a C-MR of the second UE 1107, and a fourth MR 1108 is an H-MR of the second UE 1107. A process shown in FIG. 11 includes:
1110. When the second UE 1107 moves from a home network to the visited network, a second MR 1105 acquires user information of the second UE 1107, where the user information includes an IP address of the second UE 1107.

Specifically, the IP address of the second UE 1107 is allocated by the home network of the second UE 1107.

1111. Establish a second forwarding tunnel between the second MR 1105 and the fourth MR 1108.

Specifically, similarly, for the method for establishing the second forwarding tunnel, reference may be made to the method for establishing the first forwarding tunnel between the first MR 904 and the third MR 902 in steps 911 to 914 in FIG. 9, or similarly, reference may be made to the method for establishing the first forwarding tunnel between the first MR 1004 and the third MR 1002 in steps 1011 to 1014 in FIG. 10. To avoid repetition, details are not repeated herein.

1112. The first UE 1103 sends a packet to the first MR 1104.

1113. The first MR 1104 transmits the packet to the fourth MR 1108 according to a destination address of the packet, that is, an address of the second UE 1107, and then the fourth MR 1108 transmits the packet to the second MR 1105 over the second forwarding tunnel, and the packet finally arrives at the second UE 1107.

1114. The first MR 1104 sends a first route request message to an H-LM 1106 of the second UE, where the first route request message includes an IP address of the second UE 1107 and first flag bit information H. The first flag bit information is used to indicate that the first UE 1103 is currently located in the home network.

1115. The H-LM 1106 of the second UE receives the first route request message, after parsing the first flag bit information H included in the first route request message, first determines that the second UE 1107 is currently located in the visited network, and then sends a first route response message to the first MR 1104, where the first route response message includes an address of the second MR 1105.

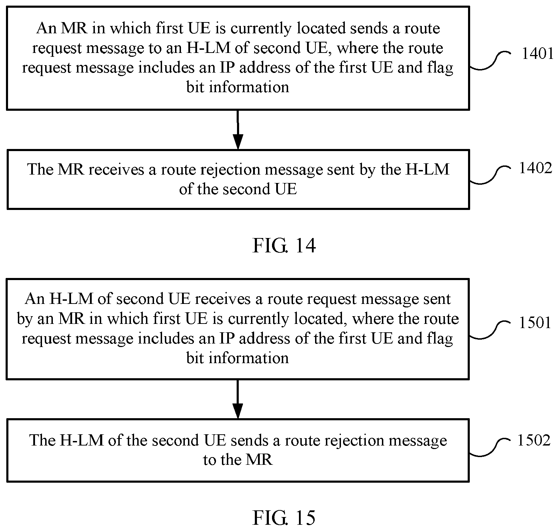

It should be noted that if the H-LM 1106 of the second UE receives the first route request message, parses the first flag bit information H included in the first route request message, and then determines that the second UE 1107 is also currently located in the home network, the H-LM 1106 of the second UE needs to send a first route rejection message to the first MR 1104, so that the first MR 1104 terminates a routing process. Specifically, this case is described in details in subsequent embodiments in FIG. 14 to FIG. 16.

1116. After receiving the first route response message, the first MR 1104 triggers to establish a forwarding tunnel between the first MR 1104 and the second MR 1105.

Specifically, reference may be made to steps 918 and 919 in FIG. 9. To avoid repetition, details are not repeated herein.

1117. The first MR 1104 and the second MR 1105 separately establish information binding.

Specifically, reference may be made to step 920 in FIG. 9. To avoid repetition, details are not repeated herein.

1118. After arriving at the first MR 1104, a subsequent packet sent by the first UE 1103 is directly sent to the second MR 1105 over the forwarding tunnel, and is finally transmitted to the destination address, that is, the second UE 1107.

1119. When the second UE 1107 moves out of a service range of the second MR 1105 and the forwarding tunnel is used only by the first UE 1103 and the second UE 1107, that is, when the forwarding tunnel is not shared by other users, the first MR 1104 triggers to release the forwarding tunnel, specifically the first MR 1104 sends a first tunnel release request message to the second MR 1105.

1120. The first MR 1104 receives a first tunnel release response message sent by the second MR 1105, so as to complete releasing the forwarding tunnel.

Correspondingly, if the first MR 1104 or the second MR 1105 in step 1116 establishes the forwarding tunnel between the first MR 1104 and the second MR 1105 according to the GTP, the first tunnel release request message in step 1119 is a carrier deletion request message, and the first tunnel release response message in step 1120 is a carrier deletion response message. Correspondingly, if the first MR 1104 or the second MR 1105 in step 1116 establishes the forwarding tunnel between the first MR 1104 and the second MR 1105 according to the PMIP, the first tunnel release request message in step 1119 is a binding cancellation indication message, and the first tunnel release response message in step 1120 is a binding cancellation confirmation message.

Optionally, in another embodiment, in step 1119, alternatively, the second MR 1105 may trigger to release the forwarding tunnel. That is, in step 1119, the second MR 1105 may send a second tunnel release request message to the first MR 1104. Correspondingly, in step 1120, the second MR 1105 receives a second tunnel release response message sent by the first MR 1104, so as to complete releasing the forwarding tunnel.

1121. When the forwarding tunnel is being released, the first MR 1104 and the second MR 1105 unbinds the information bound in step 1117.

In this way, according to this embodiment of the present invention, a forwarding tunnel is established between MRs in visited networks, so that data is transmitted over the forwarding tunnel, which can reduce route redundancy.

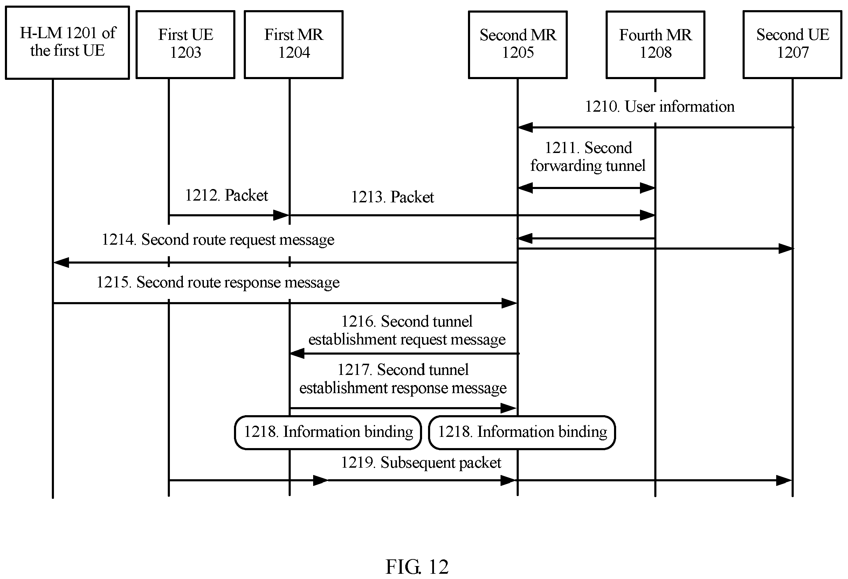

FIG. 12 is a schematic flowchart of a route optimization process according to another embodiment of the present invention. In FIG. 12, first UE 1203 is currently located in a home network, and second UE 1207 is currently located in a visited network. A first MR 1204 is an H-MR of the first UE 1203, a second MR 1205 is a C-MR of the second UE 1207, and a fourth MR 1208 is an H-MR of the second UE 1207. A process shown in FIG. 12 includes:
For steps 1210 to 1213, reference may be made to steps 1110 to 1113 in FIG. 11. To avoid repetition, details are not repeated herein.

1214. The second MR 1205 sends a second route request message to an H-LM 1201 of the first UE, where the second route request message includes an IP address of the first UE 1203.

1215. The second MR 1205 receives a second route response message sent by the H-LM 1201 of the first UE, where the second route response message includes an address of the first MR 1204.

1216. The second MR 1205 triggers to establish a forwarding tunnel between the first MR 1204 and the second MR 1205, and the second MR 1205 sends a second tunnel establishment request message to the first MR 1204.

1217. The second MR 1205 receives a second tunnel establishment response message sent by the first MR 1204, so as to complete establishing the forwarding tunnel.

Optionally, in an embodiment, the second MR 1205 may establish the forwarding tunnel between the first MR 1204 and the second MR 1205 according to the GTP. The second tunnel establishment request message in step 1216 is a carrier request message, and the second tunnel establishment response message in step 1217 is a carrier response message.

Optionally, in another embodiment, the second MR 1205 may establish the forwarding tunnel between the first MR 1204 and the second MR 1205 according to the PMIP. The second tunnel establishment request message in step 1216 is a proxy binding update message, and the second tunnel establishment response message in step 1217 is a proxy binding confirmation message.

For step 1218 and step 1219, reference may be made to steps 1117 and 1118 in FIG. 11. To avoid repetition, details are not repeated herein.

In addition, in this embodiment of the present invention, for a step after step 1219, reference may also be made to steps 1119 to 1121 in FIG. 11. To avoid repetition, details are not repeated herein.

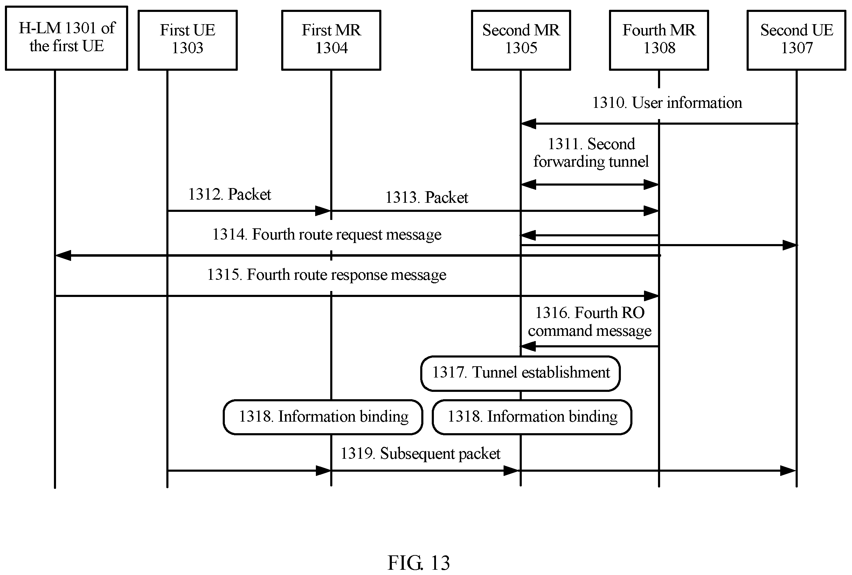

FIG. 13 is a schematic flowchart of a route optimization process according to another embodiment of the present invention. In FIG. 13, first UE 1303 is currently located in a home network, and second UE 1307 is currently located in a visited network. A first MR 1304 is an H-MR of the first UE 1303, a second MR 1305 is a C-MR of the second UE 1307, and a fourth MR 1308 is an H-MR of the second UE 1307. A process shown in FIG. 13 includes:
For steps 1310 to 1313, reference may be made to steps 1110 to 1113 in FIG. 11. To avoid repetition, details are not repeated herein.

1314. The fourth MR 1308 initiates a route optimization process, specifically the fourth MR 1308 sends a fourth route request message to an H-LM 1301 of the first UE, where the fourth route request message includes an IP address of the first UE 1303.

1315. The fourth MR 1308 receives a fourth route response message sent by the H-LM 1301 of the first UE, where the fourth route response message includes an address of the first MR 1304.

1316. The fourth MR 1308 sends a fourth RO command message to the second MR 1305, where the fourth RO command message includes the IP address of the first UE 1303, an IP address of the second UE 1307, and the address of the first MR 1304.

1317. After receiving the fourth RO command message, the second MR 1305 triggers to establish a forwarding tunnel between the first MR 1304 and the second MR 1305.

Specifically, for step 1217, reference may be made to steps 1216 and 1217 in FIG. 12. To avoid repetition, details are not repeated herein.

Optionally, in an embodiment, in step 1216, alternatively, the fourth MR 1208 may send a third RO command message to the first MR 1304, where the third RO command message includes the IP address of the first UE 1303, the IP address of the second UE 1307, and an address of the second MR 1305. In addition, in step 1217, the first MR 1304 triggers to establish the forwarding tunnel between the first MR 1304 and the second MR 1305.

For step 1318 and step 1319, reference may be made to steps 1117 and 1118 in FIG. 11. To avoid repetition, details are not repeated herein.

In addition, in this embodiment of the present invention, for a step after step 1319, reference may also be made to steps 1119 to 1121 in FIG. 11. To avoid repetition, details are not repeated herein.

It should be noted that the embodiments shown in FIG. 12 and FIG. 13 are not only applicable to a scenario in which the first UE is currently located in the home network and the second UE is currently located in the visited network, but also applicable to a scenario in which both the first UE and the second UE are currently located in visited networks. To avoid repetition, details are not repeated herein.

In this way, according to this embodiment of the present invention, a forwarding tunnel is established between MRs in visited networks, so that data is transmitted over the forwarding tunnel, which can reduce route redundancy.

FIG. 14 is a flowchart of a route optimization method according to another embodiment of the present invention. The method shown in FIG. 14 includes:
1401. An MR in which first UE is currently located sends a route request message to an H-LM of second UE, where the route request message includes an IP address of the first UE and flag bit information, and the flag bit information is used to indicate that the MR is an H-MR of the first UE, that is, the first UE is currently located in a home network.

Specifically, the MR sends the route request message to the H-LM of the second UE to initiate a route optimization process.

1402. The MR receives a route rejection message sent by the H-LM of the second UE.

Specifically, the MR receives the route rejection message and then terminates the route optimization process.

According to this embodiment of the present invention, for two user equipments that are both currently located in home networks, flag bit information is added to identify whether the UEs are currently located in the home networks, and further determine whether a route optimization process needs to be performed.

FIG. 15 is a flowchart of a route optimization method according to another embodiment of the present invention. The method shown in FIG. 15 includes:
1501. An H-LM of second UE receives a route request message sent by an MR in which first UE is currently located, where the route request message includes an IP address of the first UE and flag bit information, and the flag bit information is used to indicate that the MR is an H-MR of the first UE, that is, the first UE is currently located in a home network.

1502. The H-LM of the second UE sends a route rejection message to the MR.

Specifically, the H-LM of the second UE receives the route request message, parses the flag bit information in the route request message to determine that the first UE is currently located in the home network, and then determines that the second UE is also currently located in a home network, and the H-LM of the second UE sends the route rejection message to the MR.

According to this embodiment of the present invention, for two user equipments that are both currently located in home networks, flag bit information is added to identify whether the UEs are currently located in the home networks, and further determine whether a route optimization process needs to be performed.

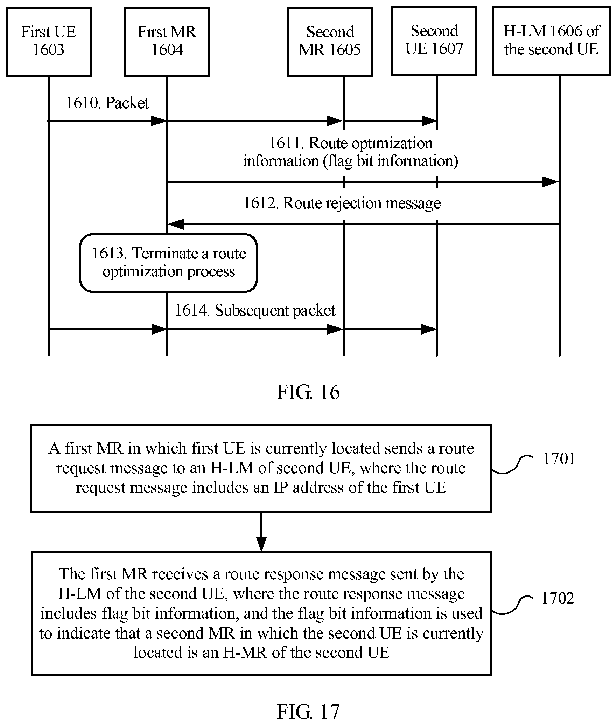

FIG. 16 is a schematic flowchart of a route optimization process according to another embodiment of the present invention. In FIG. 16, first UE 1603 is currently located in a home network, and second UE 1607 is currently located in a home network. A first MR 1604 is an H-MR of the first UE 1603, and a second MR 1605 is an H-MR of the second UE 1607. A process shown in FIG. 16 includes:
1610. The first UE 1603 sends a packet to the first MR 1604.
1611. The first MR 1604 initiates a route optimization process when sending the packet to the second UE 1607 according to a destination address of the packet. Specifically, the first MR 1604 sends a route optimization message to an H-LM 1606 of the second UE, where the route optimization message includes an IP address of the second UE and flag bit information, and the flag bit information is used to indicate that the first UE 1603 is currently located in the home network.
1612. The H-LM 1606 of the second UE receives a route request message, parses the flag bit information in the route request message to determine that the first UE 1603 is currently located in the home network, and then determines that the second UE 1607 is also currently located in the home network, and the H-LM 1606 of the second UE sends a route rejection message to the first MR 1604.
1613. The first MR 1604 terminates the route optimization process according to the route rejection message.
1614. A subsequent packet sent by the first UE 1603 to the first MR 1604 is still transmitted to the second UE 1607 by using the second MR 1605.

In this way, according to this embodiment of the present invention, flag bit information used to indicate that UE is located in a home network is added into a route optimization process, so as to determine whether route optimization needs to be performed, thereby avoiding establishing a tunnel when both two UEs are located in home networks and reducing expenditure.

FIG. 17 is a flowchart of a route optimization method according to another embodiment of the present invention. The method includes:
1701. A first MR in which first UE is currently located sends a route request message to an H-LM of second UE, where the route request message includes an IP address of the first UE.
1702. The first MR receives a route response message sent by the H-LM of the second UE, where the route response message includes flag bit information, and the flag bit information is used to indicate that a second MR in which the second UE is currently located is an H-MR of the second UE, that is, the flag bit information is used to indicate that the second UE is currently located in a home network.

Specifically, the first MR receives the route response message, parses the flag bit information in the route response message to determine that the second UE is currently located in the home network, then determines that the first UE is also currently located in a home network, and terminates a route optimization process.

According to this embodiment of the present invention, for two user equipments that are both currently located in home networks, flag bit information is added to identify whether the UEs are currently located in the home networks, and further determine whether a route optimization process needs to be performed.

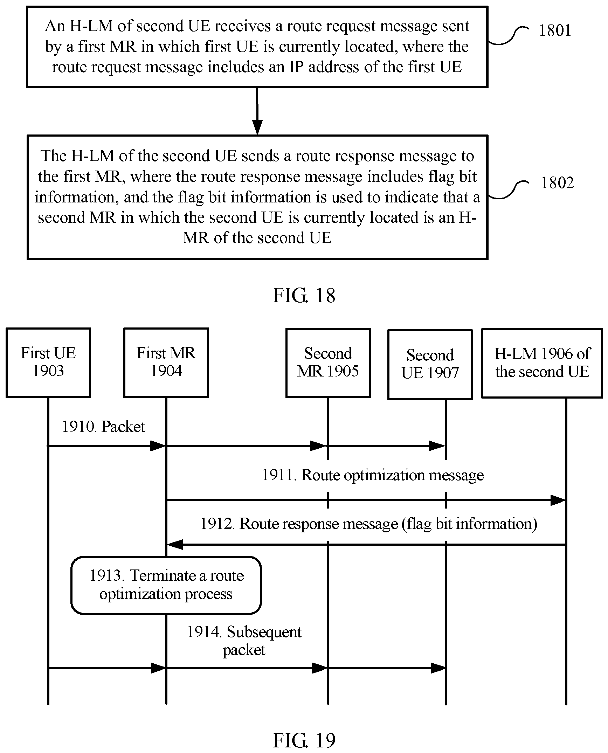

FIG. 18 is a flowchart of a route optimization method according to another embodiment of the present invention. The method includes:
1801. An H-LM of second UE receives a route request message sent by a first MR in which first UE is currently located, where the route request message includes an IP address of the first UE.
1802. The H-LM of the second UE sends a route response message to the first MR, where the route response message includes flag bit information, and the flag bit information is used to indicate that a second MR in which the second UE is currently located is an H-MR of the second UE.

According to this embodiment of the present invention, for two user equipments that are both currently located in home networks, flag bit information is added to identify whether the UEs are currently located in the home networks, and further determine whether a route optimization process needs to be performed.

FIG. 19 is a schematic flowchart of a route optimization process according to another embodiment of the present invention. In FIG. 19, first UE 1903 is currently located in a home network, and second UE 1907 is currently located in a home network. A first MR 1904 is an H-MR of the first UE 1903, and a second MR 1905 is an H-MR of the second UE 1907. A process shown in FIG. 19 includes:
1910. The first UE 1903 sends a packet to the first MR 1904.
1911. The first MR 1904 initiates a route optimization process when sending the packet to the second UE 1907 according to a destination address of the packet. Specifically, the first MR 1904 sends a route optimization message to an H-LM 1906 of the second UE, where the route optimization message includes an IP address of the second UE.
1912. The H-LM 1906 of the second UE sends a route response message to the first MR 1904, where the route response message includes flag bit information, and the flag bit information is used to indicate that the second UE 1907 is currently located in the home network.
1913. After receiving the route response message, the first MR 1904 parses the flag bit information in the route response message to determine that the second UE 1907 is currently located in the home network, then determines that the first UE 1903 is also currently located in the home network, and terminates the route optimization process.
1914. A subsequent packet sent by the first UE 1903 to the first MR 1904 is still transmitted to the second UE 1907 by using the second MR 1905.

In this way, according to this embodiment of the present invention, flag bit information used to indicate that UE is located in a home network is added into a route optimization process, so as to determine whether route optimization needs to be performed, thereby avoiding establishing a tunnel when both two UEs are located in home networks and reducing expenditure.

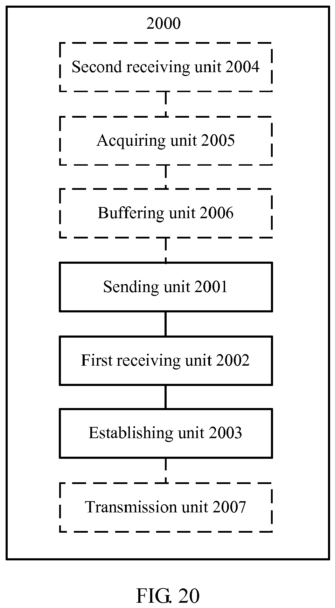

FIG. 20 is a block diagram of a mobile router according to an embodiment of the present invention. An MR 2000 in FIG. 20 is an MR in which first UE is currently located, and the MR 2000 includes: a sending unit 2001, a first receiving unit 2002, and an establishing unit 2003.

The sending unit 2001 is configured to send a route request message to an H-LM of second UE, where the route request message includes an IP address of the second UE. The first receiving unit 2002 is configured to receive a route response message sent by the H-LM of the second UE, where the route response message includes an address of a second MR in which the second UE is currently located. The establishing unit 2003 is configured to establish a forwarding tunnel between the MR 2000 and the second MR according to the address of the second MR, where at least one UE of the first UE and the second UE is currently located in a visited network.

According to this embodiment of the present invention, a forwarding tunnel is established between MRs in visited networks, so that data is transmitted over the forwarding tunnel, which can reduce route redundancy.

Optionally, in an embodiment, the MR 2000 may further include: a second receiving unit 2004, an acquiring unit 2005, a buffering unit 2006, and a transmission unit 2007.

The second receiving unit 2004 is configured to receive a packet sent by the first UE. The acquiring unit 2005 is configured to acquire the IP address of the second UE in the packet received by the second receiving unit 2004. The buffering unit 2006 is configured to buffer the packet received by the second receiving unit 2004. The transmission unit 2007 is configured to transmit, to the second MR over the forwarding tunnel established by the establishing unit 2003, the packet buffered by the buffering unit 2006.

Optionally, in an embodiment, when the first UE is currently located in a home network, the route request message sent by the sending unit 2001 may further include first flag bit information, and the first flag bit information is used to indicate that the MR 2000 is an H-MR of the first UE.

Optionally, in another embodiment, when the second UE is currently located in a home network, the route response message received by the first receiving unit 2002 may further include second flag bit information, and the second flag bit information is used to indicate that the second MR is an H-MR of the second UE.

Optionally, in another embodiment, the establishing unit 2003 may further include a first sending subunit and a first receiving subunit.

The first sending subunit is configured to send a first tunnel establishment request message to the second MR. The first receiving subunit is configured to receive a first tunnel establishment response message sent by the second MR, so as to complete establishing the forwarding tunnel.

Optionally, in another embodiment, the establishing unit 2003 may further include a second receiving subunit and a second sending subunit.

The second receiving subunit is configured to receive a second tunnel establishment request message sent by the second MR. The second sending subunit is configured to send a second tunnel establishment response message to the second MR, so as to complete establishing the forwarding tunnel.

Optionally, in another embodiment, the MR 2000 may further include a binding unit, configured to bind the following information: an IP address of the first UE, the IP address of the second UE, the address of the second MR, and tunnel information of the forwarding tunnel.

Optionally, in another embodiment, the MR 2000 may further include an unbinding unit, configured to unbind the information when the first UE is currently located in a visited network and the first UE is not currently located within a service range of the MR 2000 any longer, or when the second UE is currently located in a visited network and the second UE is not currently located within a service range of the second MR any longer.

Optionally, in another embodiment, the MR 2000 may further include a releasing unit, configured to release the forwarding tunnel when the forwarding tunnel is not shared by another UE.

Optionally, in an embodiment, the releasing unit may include a third sending subunit and a third receiving subunit.

The third sending subunit is configured to send a first tunnel release request message to the second MR. The third receiving subunit is configured to receive a first tunnel release response message sent by the second MR, so as to complete releasing the forwarding tunnel.

Optionally, in another embodiment, the releasing unit may include a fourth receiving subunit and a fourth sending subunit.

The fourth receiving subunit is configured to receive a second tunnel release request message sent by the second MR. The fourth sending subunit is configured to send a second tunnel release response message to the second MR, so as to complete releasing the forwarding tunnel.

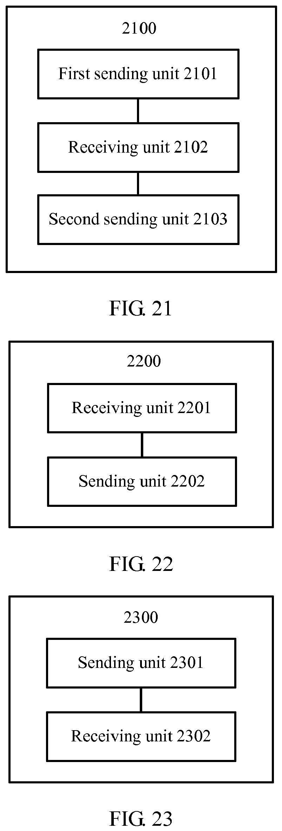

FIG. 21 is a block diagram of a mobile router according to another embodiment of the present invention. An MR 2100 in FIG. 21 is an H-MR of first UE, and the MR 2100 includes: a first sending unit 2101, a receiving unit 2102, and a second sending unit 2103.

The first sending unit 2101 is configured to send a route request message to an H-LM of second UE, where the route request message includes an IP address of the second UE. The receiving unit 2102 is configured to receive a route response message sent by the H-LM of the second UE, where the route response message includes an address of a second MR in which the second UE is currently located. The second sending unit 2103 is configured to send a first RO command message to a first MR in which the first UE is currently located, where the first RO command message includes the address of the second MR, and the first RO command message is used by the first MR to establish a forwarding tunnel between the first MR and the second MR according to the address of the second MR; or configured to send a second RO command message to the second MR, where the second RO command message includes an address of the first MR, and the second RO command message is used by the second MR to establish a forwarding tunnel between the first MR and the second MR according to the address of the first MR, where the first UE is currently located in a visited network.

According to this embodiment of the present invention, a forwarding tunnel is established between MRs in visited networks, so that data is transmitted over the forwarding tunnel, which can reduce route redundancy.

FIG. 22 is a block diagram of a location manager entity according to another embodiment of the present invention. An LM 2200 in FIG. 22 is an H-LM of first UE, and the LM 2200 includes: a receiving unit 2201 and a sending unit 2202.

The receiving unit 2201 is configured to receive a route request message sent by a second MR in which second UE is currently located, where the route request message includes an IP address of the first UE. The sending unit 2202 is configured to send a route response message to the second MR, where the route response message includes an address of a first MR in which the first UE is currently located, where at least one UE of the first UE and the second UE is currently located in a visited network.

Optionally, in an embodiment, when the second UE is currently located in a home network, the route request message received by the receiving unit 2201 may further include first flag bit information, where the first flag bit information is used to indicate that the second MR is an H-MR of the second UE.

Optionally, in another embodiment, when the first UE is currently located in a home network, the route response message sent by the sending unit 2202 may further include second flag bit information, where the second flag bit information is used to indicate that the first MR is an H-MR of the first UE.

According to this embodiment of the present invention, a forwarding tunnel is established between MRs in visited networks, so that data is transmitted over the forwarding tunnel, which can reduce route redundancy.

FIG. 23 is a block diagram of a mobile router according to another embodiment of the present invention. An MR 2300 shown in FIG. 23 is an MR in which first UE is currently located, and the MR 2300 includes: a sending unit 2301, and a receiving unit 2302.

The sending unit 2301 is configured to send a route request message to an H-LM of second UE, where the route request message includes an IP address of the first UE and flag bit information, and the flag bit information is used to indicate that the MR 2300 is an H-MR of the first UE. The receiving unit 2302 is configured to receive a route rejection message sent by the H-LM of the second UE.

According to this embodiment of the present invention, for two user equipments that are both currently located in home networks, flag bit information is added to identify whether the UEs are currently located in the home networks, and further determine whether a route optimization process needs to be performed.

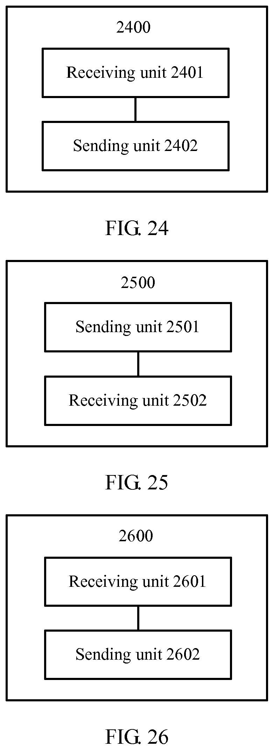

FIG. 24 is a block diagram of a location manager entity according to another embodiment of the present invention. An LM 2400 shown in FIG. 24 is an H-LM of second UE, and the LM 2400 includes: a receiving unit 2401 and a sending unit 2402.

The receiving unit 2401 is configured to receive a route request message sent by an MR in which first UE is currently located, where the route request message includes an IP address of the first UE and flag bit information, and the flag bit information is used to indicate that the MR is an H-MR of the first UE. The sending unit 2402 is configured to send a route rejection message to the MR.

According to this embodiment of the present invention, for two user equipments that are both currently located in home networks, flag bit information is added to identify whether the UEs are currently located in the home networks, and further determine whether a route optimization process needs to be performed.

FIG. 25 is a block diagram of a mobile router according to another embodiment of the present invention. An MR 2500 shown in FIG. 25 is an MR in which first UE is currently located, and the MR 2500 includes: a sending unit 2501 and a receiving unit 2502.

The sending unit 2501 is configured to send a route request message to an H-LM of second UE, where the route request message includes an IP address of the first UE. The receiving unit 2502 is configured to receive a route response message sent by the H-LM of the second UE, where the route response message includes flag bit information, and the flag bit information is used to indicate that a second MR in which the second UE is currently located is an H-MR of the second UE, where the first UE is currently located in a home network.

In this way, according to this embodiment of the present invention, flag bit information used to indicate that UE is located in a home network is added into a route optimization process, so as to determine whether route optimization needs to be performed, thereby avoiding establishing a tunnel when both two UEs are located in home networks and reducing expenditure.

FIG. 26 is a block diagram of a location manager entity according to another embodiment of the present invention. An LM 2600 shown in FIG. 26 is an H-LM of second UE, and the LM 2600 includes: a receiving unit 2601 and a sending unit 2601.

The receiving unit 2601 is configured to receive a route request message sent by a first MR in which first UE is currently located, where the route request message includes an IP address of the first UE. The sending unit 2602 is configured to send a route response message to the first MR, where the route response message includes flag bit information, and the flag bit information is used to indicate that a second MR in which the second UE is currently located is an H-MR of the second UE, so that the first MR terminates a route optimization process, where the first UE is currently located in a home network.

In this way, according to this embodiment of the present invention, flag bit information used to indicate that UE is located in a home network is added into a route optimization process, so as to determine whether route optimization needs to be performed, thereby avoiding establishing a tunnel when both two UEs are located in home networks and reducing expenditure.

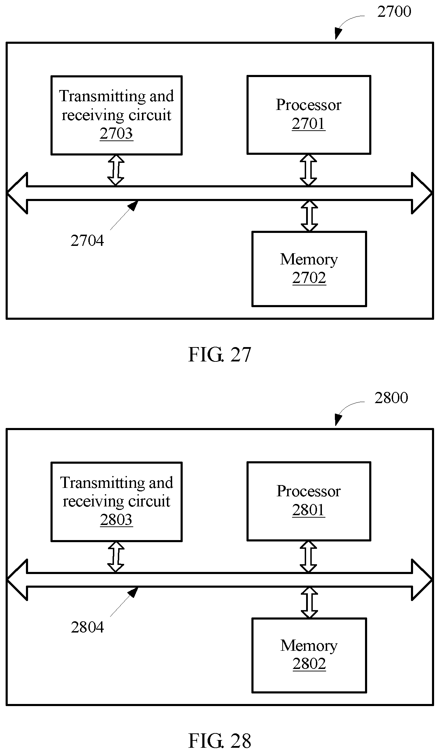

FIG. 27 is a block diagram of a mobile router according to another embodiment of the present invention. An MR 2700 in FIG. 27 is an MR in which first UE is currently located, and the MR 2700 includes: a processor 2701, a memory 2702, and a transmitting and receiving circuit 2703.

The transmitting and receiving circuit 2703 is configured to send a route request message to an H-LM of second UE, where the route request message includes an IP address of the second UE; and is further configured to receive a route response message sent by the H-LM of the second UE, where the route response message includes an address of a second MR in which the second UE is currently located. The processor 2701 is configured to establish a forwarding tunnel between the MR 2700 and the second MR according to the address of the second MR, where at least one UE of the first UE and the second UE is currently located in a visited network.

According to this embodiment of the present invention, a forwarding tunnel is established between MRs in visited networks, so that data is transmitted over the forwarding tunnel, which can reduce route redundancy.

Components in the MR 2700 are coupled together by using a bus system 2704, where in addition to a data bus, the bus system 2704 includes a power supply bus, a control bus, and a status signal bus. However, for clarity of description, various buses are marked as the bus system 2704 in FIG. 27.

The foregoing methods disclosed in the embodiments of the present invention may be applied to the processor 2701, or implemented by the processor 2701. The processor 2701 may be an integrated circuit chip and has a signal processing capability. In an implementation process, the steps of the foregoing methods may be completed by using an integrated logic circuit of hardware in the processor 2701 or an instruction in a form of software. The processor 2701 may be a general purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a discrete gate or transistor logic device, or a discrete hardware assembly. The processor 2701 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a random access memory (Random Access Memory, RAM), a flash memory, a read-only memory (Read-Only Memory, ROM), a programmable read-only memory, an electrically erasable programmable memory, or a register. The storage medium is located in the memory 2702, and the processor 2701 reads information in the memory 2702 and completes the steps of the foregoing methods in combination with hardware of the processor 2701.

Optionally, in an embodiment, the transmitting and receiving circuit 2703 may be configured to receive a packet sent by the first UE. The processor 2701 is configured to acquire the IP address of the second UE in the packet received by the transmitting and receiving circuit 2703, buffer the packet received by the transmitting and receiving circuit 2703, and further, transmit the packet to the second MR over the forwarding tunnel.

Optionally, in an embodiment, when the first UE is currently located in a home network, the route request message sent by the transmitting and receiving circuit 2703 may further include first flag bit information, and the first flag bit information is used to indicate that the MR 2700 is an H-MR of the first UE.

Optionally, in another embodiment, when the second UE is currently located in a home network, the route response message received by the transmitting and receiving circuit 2703 may further include second flag bit information, and the second flag bit information is used to indicate that the second MR is an H-MR of the second UE.

Optionally, in another embodiment, the transmitting and receiving circuit 2703 may be further configured to send a first tunnel establishment request message to the second MR, and further, receive a first tunnel establishment response message sent by the second MR, so as to complete establishing the forwarding tunnel.

Optionally, in another embodiment, the transmitting and receiving circuit 2703 may be configured to receive a second tunnel establishment request message sent by the second MR, and further configured to send a second tunnel establishment response message to the second MR, so as to complete establishing the forwarding tunnel.

Optionally, in another embodiment, the processor 2701 may be further configured to bind the following information: an IP address of the first UE, the IP address of the second UE, the address of the second MR, and tunnel information of the forwarding tunnel.

Optionally, in another embodiment, the processor 2701 may be further configured to unbind the information when the first UE is currently located in a visited network and the first UE is not currently located within a service range of the MR 2700 any longer, or when the second UE is currently located in a visited network and the second UE is not currently located within a service range of the second MR any longer.

Optionally, in another embodiment, the processor 2701 may be further configured to release the forwarding tunnel when the forwarding tunnel is not shared by another UE.

Optionally, in an embodiment, the transmitting and receiving circuit 2704 may be configured to send a first tunnel release request message to the second MR, and further, receive a first tunnel release response message sent by the second MR, so as to complete releasing the forwarding tunnel.

Optionally, in another embodiment, the transmitting and receiving circuit 2704 may be configured to receive a second tunnel release request message sent by the second MR, and further, send a second tunnel release response message to the second MR, so as to complete releasing the forwarding tunnel.

The MR 2700 can implement each process implemented by the first MR in the embodiment in FIG. 3. To avoid repetition, details are not repeated herein.

FIG. 28 is a block diagram of a mobile router according to another embodiment of the present invention. An MR 2800 in FIG. 28 is an H-MR of first UE, and the MR 2800 includes: a processor 2801, a memory 2802, and a transmitting and receiving circuit 2803.

The transmitting and receiving circuit 2803 is configured to: send a route request message to an H-LM of second UE, where the route request message includes an IP address of the second UE; receive a route response message sent by the H-LM of the second UE, where the route response message includes an address of a second MR in which the second UE is currently located; and further, send a first RO command message to a first MR in which the first UE is currently located, where the first RO command message includes the address of the second MR, and the first RO command message is used by the first MR to establish a forwarding tunnel between the first MR and the second MR according to the address of the second MR; or send a second RO command message to the second MR, where the second RO command message includes an address of the first MR, and the second RO command message is used by the second MR to establish a forwarding tunnel between the first MR and the second MR according to the address of the first MR, where the first UE is currently located in a visited network.

According to this embodiment of the present invention, a forwarding tunnel is established between MRs in visited networks, so that data is transmitted over the forwarding tunnel, which can reduce route redundancy.

Components in the MR 2800 are coupled together by using a bus system 2804, where in addition to a data bus, the bus system 2804 includes a power supply bus, a control bus, and a status signal bus. However, for clarity of description, various buses are marked as the bus system 2804 in FIG. 28.

The foregoing methods disclosed in the embodiments of the present invention may be applied to the processor 2801, or implemented by the processor 2801. The processor 2801 may be an integrated circuit chip and has a signal processing capability. In an implementation process, the steps of the foregoing methods may be completed by using an integrated logic circuit of hardware in the processor 2801 or an instruction in a form of software. The processor 2801 may be a general purpose processor, a DSP, an ASIC, an FPGA or another programmable logic device, a discrete gate or transistor logic device, or a discrete hardware assembly. The processor 2801 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a RAM, a flash memory, a ROM, a programmable read-only memory, an electrically erasable programmable memory, or a register. The storage medium is located in the memory 2802, and the processor 2801 reads information in the memory 2802 and completes the steps of the foregoing methods in combination with hardware of the processor 2801.

The MR 2800 can implement each process implemented by the third MR in the embodiment in FIG. 5. To avoid repetition, details are not repeated herein.

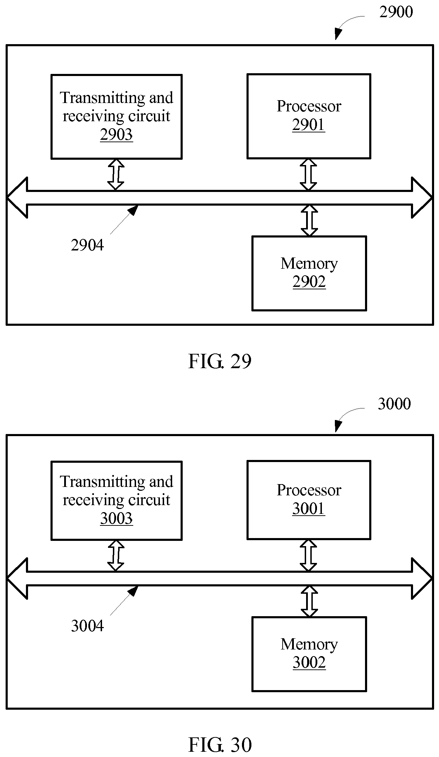

FIG. 29 is a block diagram of a location manager entity according to another embodiment of the present invention. An LM 2900 in FIG. 29 is an H-LM of first UE, and the LM 2900 includes: a processor 2901, a memory 2902, and a transmitting and receiving circuit 2903.

The transmitting and receiving circuit 2903 is configured to: receive a route request message sent by a second MR in which second UE is currently located, where the route request message includes an IP address of the first UE; and send a route response message to the second MR, where the route response message includes an address of a first MR in which the first UE is currently located, where at least one UE of the first UE and the second UE is currently located in a visited network.

According to this embodiment of the present invention, a forwarding tunnel is established between MRs in visited networks, so that data is transmitted over the forwarding tunnel, which can reduce route redundancy.

Components in the MR 2900 are coupled together by using a bus system 2904, where in addition to a data bus, the bus system 2904 includes a power supply bus, a control bus, and a status signal bus. However, for clarity of description, various buses are marked as the bus system 2904 in FIG. 29.

The foregoing methods disclosed in the embodiments of the present invention may be applied to the processor 2901, or implemented by the processor 2901. The processor 2901 may be an integrated circuit chip and has a signal processing capability. In an implementation process, the steps of the foregoing methods may be completed by using an integrated logic circuit of hardware in the processor 2901 or an instruction in a form of software. The processor 2901 may be a general purpose processor, a DSP, an ASIC, an FPGA or another programmable logic device, a discrete gate or transistor logic device, or a discrete hardware assembly. The processor 2901 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a RAM, a flash memory, a ROM, a programmable read-only memory, an electrically erasable programmable memory, or a register. The storage medium is located in the memory 2902, and the processor 2901 reads information in the memory 2902 and completes the steps of the foregoing methods in combination with hardware of the processor 2901.

Optionally, in an embodiment, when the second UE is currently located in a home network, the route request message received by the transmitting and receiving circuit 2903 may further include first flag bit information, where the first flag bit information is used to indicate that the second MR is an H-MR of the second UE.

Optionally, in another embodiment, when the first UE is currently located in a home network, the route response message sent by the transmitting and receiving circuit 2903 may further include second flag bit information, where the second flag bit information is used to indicate that the first MR is an H-MR of the first UE.

The LM 2900 can implement each process implemented by the H-LM of the first UE in the embodiment in FIG. 7. To avoid repetition, details are not repeated herein.

FIG. 30 is a block diagram of a mobile router according to another embodiment of the present invention. An MR 3000 shown in FIG. 30 is an MR in which first UE is currently located, and the MR 3000 includes: a processor 3001, a memory 3002, and a transmitting and receiving circuit 3003.

The transmitting and receiving circuit 3003 is configured to: send a route request message to an H-LM of second UE, where the route request message includes an IP address of the first UE and flag bit information, and the flag bit information is used to indicate that the MR 3000 is an H-MR of the first UE; and further receive a route rejection message sent by the H-LM of the second UE.

According to this embodiment of the present invention, for two user equipments that are both currently located in home networks, flag bit information is added to identify whether the UEs are currently located in the home networks, and further determine whether a route optimization process needs to be performed.

Components in the MR 3000 are coupled together by using a bus system 3004, where in addition to a data bus, the bus system 3004 includes a power supply bus, a control bus, and a status signal bus. However, for clarity of description, various buses are marked as the bus system 3004 in FIG. 30.

The foregoing methods disclosed in the embodiments of the present invention may be applied to the processor 3001, or implemented by the processor 3001. The processor 3001 may be an integrated circuit chip and has a signal processing capability. In an implementation process, the steps of the foregoing methods may be completed by using an integrated logic circuit of hardware in the processor 3001 or an instruction in a form of software. The processor 3001 may be a general purpose processor, a DSP, an ASIC, an FPGA or another programmable logic device, a discrete gate or transistor logic device, or a discrete hardware assembly. The processor 3001 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a RAM, a flash memory, a ROM, a programmable read-only memory, an electrically erasable programmable memory, or a register. The storage medium is located in the memory 3002, and the processor 3001 reads information in the memory 3002 and completes the steps of the foregoing methods in combination with hardware of the processor 3001.

The MR 3000 can implement each process implemented by the first MR in the embodiment in FIG. 14. To avoid repetition, details are not repeated herein.

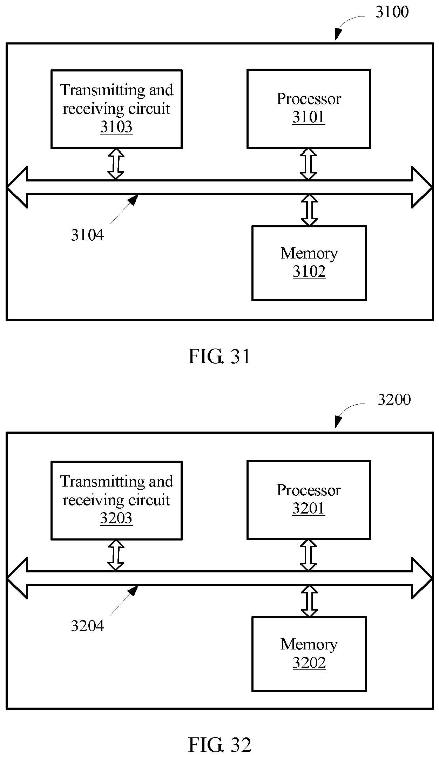

FIG. 31 is a block diagram of a location manager entity according to another embodiment of the present invention. An LM 3100 shown in FIG. 31 is an H-LM of second UE, and the LM 3100 includes: a processor 3101, a memory 3102, and a transmitting and receiving circuit 3103.

The transmitting and receiving circuit 3103 is configured to: receive a route request message sent by an MR in which first UE is currently located, where the route request message includes an IP address of the first UE and flag bit information, and the flag bit information is used to indicate that the MR is an H-MR of the first UE; and further send a route rejection message to the MR.

According to this embodiment of the present invention, for two user equipments that are both currently located in home networks, flag bit information is added to identify whether the UEs are currently located in the home networks, and further determine whether a route optimization process needs to be performed.

Components in the LM 3100 are coupled together by using a bus system 3104, where in addition to a data bus, the bus system 3104 includes a power supply bus, a control bus, and a status signal bus. However, for clarity of description, various buses are marked as the bus system 3104 in FIG. 31.

The foregoing methods disclosed in the embodiments of the present invention may be applied to the processor 3101, or implemented by the processor 3101. The processor 3101 may be an integrated circuit chip and has a signal processing capability. In an implementation process, the steps of the foregoing methods may be completed by using an integrated logic circuit of hardware in the processor 3101 or an instruction in a form of software. The processor 3101 may be a general purpose processor, a DSP, an ASIC, an FPGA or another programmable logic device, a discrete gate or transistor logic device, or a discrete hardware assembly. The processor 3101 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a RAM, a flash memory, a ROM, a programmable read-only memory, an electrically erasable programmable memory, or a register. The storage medium is located in the memory 3102, and the processor 3101 reads information in the memory 3102 and completes the steps of the foregoing methods in combination with hardware of the processor 3101.

The LM 3100 can implement each process implemented by the H-LM of the second UE in the embodiment in FIG. 15. To avoid repetition, details are not repeated herein.

FIG. 32 is a block diagram of a mobile router according to another embodiment of the present invention. An MR 3200 shown in FIG. 32 is an MR in which first UE is currently located, and the MR 3200 includes: a processor 3201, a memory 3202, and a transmitting and receiving circuit 3203.

The transmitting and receiving circuit 3203 is configured to: send a route request message to an H-LM of second UE, where the route request message includes an IP address of the first UE; and further receive a route response message sent by the H-LM of the second UE, where the route response message includes flag bit information, and the flag bit information is used to indicate that a second MR in which the second UE is currently located is an H-MR of the second UE, where the first UE is currently located in a home network.

In this way, according to this embodiment of the present invention, flag bit information used to indicate that UE is located in a home network is added into a route optimization process, so as to determine whether route optimization needs to be performed, thereby avoiding establishing a tunnel when both two UEs are located in home networks and reducing expenditure.

Components in the MR 3200 are coupled together by using a bus system 3204, where in addition to a data bus, the bus system 3004 includes a power supply bus, a control bus, and a status signal bus. However, for clarity of description, various buses are marked as the bus system 3204 in FIG. 32.

The foregoing methods disclosed in the embodiments of the present invention may be applied to the processor 3201, or implemented by the processor 3201. The processor 3201 may be an integrated circuit chip and has a signal processing capability. In an implementation process, the steps of the foregoing methods may be completed by using an integrated logic circuit of hardware in the processor 3201 or an instruction in a form of software. The processor 3201 may be a general purpose processor, a DSP, an ASIC, an FPGA or another programmable logic device, a discrete gate or transistor logic device, or a discrete hardware assembly. The processor 3201 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a RAM, a flash memory, a ROM, a programmable read-only memory, an electrically erasable programmable memory, or a register. The storage medium is located in the memory 3202, and the processor 3201 reads information in the memory 3202 and completes the steps of the foregoing methods in combination with hardware of the processor 3201.

The MR 3200 can implement each process implemented by the first MR in the embodiment in FIG. 17. To avoid repetition, details are not repeated herein.

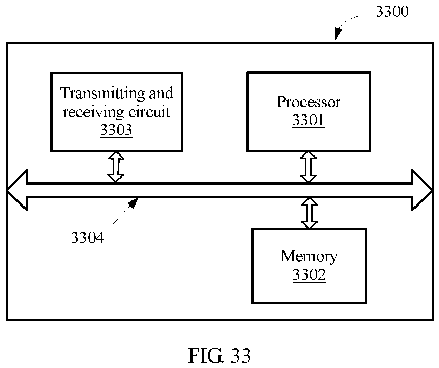

FIG. 33 is a block diagram of a location manager entity according to another embodiment of the present invention. An LM 3300 shown in FIG. 33 is an H-LM of second UE, and the LM 3300 includes: a processor 3301, a memory 3302, and a transmitting and receiving circuit 3303.

The transmitting and receiving circuit 3303 is configured to: receive a route request message sent by a first MR in which first UE is currently located, where the route request message includes an IP address of the first UE; and further send a route response message to the first MR, where the route response message includes flag bit information, and the flag bit information is used to indicate that a second MR in which the second UE is currently located is an H-MR of the second UE, so that the first MR terminates a route optimization process, where the first UE is currently located in a home network.

In this way, according to this embodiment of the present invention, flag bit information used to indicate that UE is located in a home network is added into a route optimization process, so as to determine whether route optimization needs to be performed, thereby avoiding establishing a tunnel when both two UEs are located in home networks and reducing expenditure.

Components in the LM 3300 are coupled together by using a bus system 3304, where in addition to a data bus, the bus system 3304 includes a power supply bus, a control bus, and a status signal bus. However, for clarity of description, various buses are marked as the bus system 3304 in FIG. 33.

The foregoing methods disclosed in the embodiments of the present invention may be applied to the processor 3301, or implemented by the processor 3301. The processor 3301 may be an integrated circuit chip and has a signal processing capability. In an implementation process, the steps of the foregoing methods may be completed by using an integrated logic circuit of hardware in the processor 3301 or an instruction in a form of software. The processor 3301 may be a general purpose processor, a DSP, an ASIC, an FPGA or another programmable logic device, a discrete gate or transistor logic device, or a discrete hardware assembly. The processor 3301 can implement or execute the methods, the steps, and the logical block diagrams disclosed in the embodiments of the present invention. The general purpose processor may be a microprocessor, or the processor may be any conventional processor or the like. The steps of the methods disclosed with reference to the embodiments of the present invention may be directly implemented by means of a hardware decoding processor, or may be implemented by using a combination of hardware and software modules in the decoding processor. The software module may be located in a mature storage medium in the art, such as a RAM, a flash memory, a ROM, a programmable read-only memory, an electrically erasable programmable memory, or a register. The storage medium is located in the memory 3302, and the processor 3301 reads information in the memory 3302 and completes the steps of the foregoing methods in combination with hardware of the processor 3301.

The LM 3300 can implement each process implemented by the H-LM of the second UE in the embodiment in FIG. 18. To avoid repetition, details are not repeated herein.

A person of ordinary skill in the art may be aware that, in combination with the examples described in the embodiments disclosed in this specification, units and methods may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In the embodiments provided in the present application, it should be understood that the disclosed apparatus and method may be implemented in other manners. For example, the described apparatus embodiment is merely exemplary. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual needs to achieve the objectives of the solutions of the embodiments.

In addition, functional units in the embodiments of the present invention may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of the present invention essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of the present invention. The foregoing storage medium includes: any medium that can store program code, such as a USB flash drive, a removable hard disk, a ROM, a RAM, a magnetic disk, or an optical disc.

The foregoing descriptions are merely specific implementation manners of the present invention, but are not intended to limit the protection scope of the present invention. Therefore, the protection scope of the present invention shall be subject to the protection scope of the claims.

## Claims

1. A route optimization method, wherein the method comprises:
establishing a forwarding tunnel between a first mobile router, MR, in a network in which a first user equipment, UE, is currently located and a second MR, in a network in which a second UE is currently located, wherein at least one UE of the first UE and the second UE is currently located in a visited network; and
transmitting data between the first UE and the second UE over the forwarding tunnel;
wherein the establishing a forwarding tunnel between a first MR in a network in which first UE is currently located and a second MR, in a network in which second UE is currently located comprises:
sending, by the first MR, a first route request message to a home location manager, H-LM, entity of the second UE, wherein the first route request message comprises an Internet Protocol IP address of the second UE acquired by the first MR from a packet sent by the first UE with the destination of the second UE, and wherein the H-LM is determined as the location manager corresponding to the IP address of the second UE;
receiving, by the first MR, a first route response message sent by the H-LM of the second UE, wherein the first route response message comprises an address of the second MR; and
establishing, by the first MR, a forwarding tunnel between the first MR and the second MR according to the address of the second MR.

2. The method according to claim 1, wherein before the sending, by the first MR, a first route request message to an H-LM entity of the second UE, the method further comprises:
receiving, by the first MR, the packet sent by the first UE;
acquiring, by the first MR, the IP address of the second UE in the packet; and
buffering, by the first MR, the packet; and
after the establishing, by the first MR, a forwarding tunnel between the first MR and the second MR according to the address of the second MR, the method further comprises:
transmitting, by the first MR, the packet to the second MR over the forwarding tunnel.

3. The method according to claim 2, wherein when the first UE is currently located in a home network, the first route request message further comprises first flag bit information, and the first flag bit information is used to indicate that the first MR is a home mobile router H-MR of the first UE.

4. The method according to claim 2, wherein when the second UE is currently located in a home network, the first route response message further comprises second flag bit information, and the second flag bit information is used to indicate that the second MR is an H-MR of the second UE.

5. The method according to any one of claims 2 to 4, wherein the establishing, by the first MR, a forwarding tunnel between the first MR and the second MR according to the address of the second MR comprises:
sending, by the first MR, a first tunnel establishment request message to the second MR; and
receiving, by the first MR, a first tunnel establishment response message sent by the second MR, so as to complete establishing the forwarding tunnel.

6. A mobile router MR, wherein the MR is an MR in a network in which a first user equipment UE is currently located, and the MR comprises:
a sending unit, configured to send a route request message to a home location manager entity H-LM of a second UE, wherein the route request message comprises an Internet Protocol IP address of the second UE and wherein the H-LM is determined as the location manager corresponding to the IP address of the second UE;
a first receiving unit, configured to receive a route response message sent by the H-LM of the second UE, wherein the route response message comprises an address of a second MR, in a network in which the second UE is currently located; and
an establishing unit, configured to establish a forwarding tunnel between the MR and the second MR according to the address of the second MR, wherein
at least one UE of the first UE and the second UE is currently located in a visited network;
wherein the MR further comprises:
a second receiving unit, configured to receive a packet sent by the first UE with the destination of the second UE;
an acquiring unit, configured to acquire the IP address of the second UE from the packet received by the second receiving unit;
a buffering unit, configured to buffer the packet received by the second receiving unit; and
a transmission unit, configured to transmit, to the second MR over the forwarding tunnel established by the establishing unit, the packet buffered by the buffering unit.

7. The MR according to claim 6, wherein when the first UE is currently located in a home network, the route request message further comprises first flag bit information, and the first flag bit information is used to indicate that the MR is a home mobile router H-MR of the first UE.

8. The MR according to claim 6, wherein when the second UE is currently located in a home network, the route response message further comprises second flag bit information, and the second flag bit information is used to indicate that the second MR is an H-MR of the second UE.

9. The MR according to any one of claims 6 to 8, wherein the establishing unit comprises:
a first sending subunit, configured to send a first tunnel establishment request message to the second MR; and
a first receiving subunit, configured to receive a first tunnel establishment response message sent by the second MR, so as to complete establishing the forwarding tunnel.

10. The MR according to any one of claims 6 to 8, wherein the establishing unit comprises:
a second receiving subunit, configured to receive a second tunnel establishment request message sent by the second MR; and
a second sending subunit, configured to send a second tunnel establishment response message to the second MR, so as to complete establishing the forwarding tunnel.

11. The MR according to any one of claims 6 to 10, wherein the MR further comprises a binding unit, configured to bind the following information: an IP address of the first UE, the IP address of the second UE, the address of the second MR, and tunnel information of the forwarding tunnel.

12. The MR according to claim 11, wherein the MR further comprises an unbinding unit, configured to unbind the information when the first UE is currently located in a visited network and the first UE is not currently located within a service range of the MR any longer, or when the second UE is currently located in a visited network and the second UE is not currently located within a service range of the second MR any longer.

13. The MR according to any one of claims 6 to 12, wherein the MR further comprises a releasing unit, configured to release the forwarding tunnel when the forwarding tunnel is not shared by another UE.

## Patentansprüche

1. Routenoptimierungsverfahren, wobei das Verfahren umfasst:
Aufbauen eines Weiterleitungstunnels zwischen einem ersten mobilen Router, MR, in einem Netzwerk, in dem sich zurzeit ein erstes Benutzergerät, UE, befindet, und einem zweiten MR in einem Netzwerk, in dem sich zurzeit ein zweites UE befindet,
wobei mindestens ein UE von dem ersten UE und dem zweiten UE sich zurzeit in einem besuchten Netzwerk befindet; und
Übertragen von Daten zwischen dem ersten UE und dem zweiten UE über den Weiterleitungstunnel;
wobei das Aufbauen eines Weiterleitungstunnels zwischen einem ersten MR in einem Netzwerk, in dem sich zurzeit das erste UE befindet, und einem zweiten MR in einem Netzwerk, in dem sich zurzeit das zweite UE befindet, umfasst:
Senden einer ersten Routenanforderungsnachricht an eine Heimatstandortmanager-Entität bzw. H-LM-Enitität des zweiten UEs durch den ersten MR, wobei die erste Routenanforderungsnachricht eine Internetprotokoll-Adresse bzw. IP-Adresse des zweiten UEs umfasst, die durch den ersten MR aus einem Paket erfasst wurde, das durch das erste UE mit dem Ziel des zweiten UEs gesendet wurde, und wobei der H-LM als Standortmanager ermittelt wurde, welcher der IP-Adresse des zweiten UEs entspricht;
Empfangen einer ersten Routenantwortnachricht, die durch den H-LM des zweiten UEs gesendet wurde, durch den ersten MR, wobei die erste Routenantwortnachricht eine Adresse des zweiten MRs umfasst; und
Aufbauen eines Weiterleitungstunnels zwischen dem ersten MR und dem zweiten MR gemäß der Adresse des zweiten MRs durch den ersten MR.

2. Verfahren nach Anspruch 1, wobei das Verfahren ferner vor dem Senden einer ersten Routenanforderungsnachricht an eine H-LM-Entität des zweiten UEs durch den ersten MR umfasst:
Empfangen eines von dem ersten UE gesendeten Pakets durch den ersten MR;
Erfassen der IP-Adresse des zweiten UEs in dem Paket durch den ersten MR; und
Puffern des Pakets durch den ersten MR; und
wobei das Verfahren nach dem Aufbauen eines Weiterleitungstunnels zwischen dem ersten MR und dem zweiten MR gemäß der Adresse des zweiten MRs durch den ersten MR ferner umfasst:
Übertragen des Pakets an den zweiten MR über den Weiterleitungstunnel durch den ersten MR.

3. Verfahren nach Anspruch 2, wobei, wenn sich das erste UE zurzeit in einem Heimnetzwerk befindet, die erste Routenanforderungsnachricht ferner erste Flag-Bit-Informationen umfasst, und die ersten Flag-Bit-Informationen verwendet werden, um anzugeben, dass der erste MR ein mobiler Heimrouter H-MR des ersten UEs ist.

4. Verfahren nach Anspruch 2, wobei, wenn sich das zweite UE zurzeit in einem Heimnetzwerk befindet, die erste Routenantwortnachricht ferner zweite Flag-Bit-Informationen umfasst, und die zweiten Flag-Bit-Informationen verwendet werden, um anzugeben, dass der zweite MR ein H-MR des zweiten UEs ist.

5. Verfahren nach einem der Ansprüche 2 bis 4, wobei das Aufbauen eines Weiterleitungstunnels zwischen dem ersten MR und dem zweiten MR gemäß der Adresse des zweiten MRs durch den ersten MR umfasst:
Senden einer ersten Tunnelaufbauanforderungsnachricht an den zweiten MR durch den ersten MR; und
Empfangen einer ersten Tunnelaufbauantwortnachricht, die durch den zweiten MR gesendet wurde, durch den ersten MR, um so das Aufbauen des Weiterleitungstunnels abzuschließen.

6. Mobiler Router, MR, wobei der MR ein MR in einem Netzwerk ist, in dem sich zurzeit ein erstes Benutzergerät, UE, befindet, und wobei der MR umfasst:
eine Sendeeinheit, die konfiguriert ist, um eine Routenanforderungsnachricht an eine Heimatstandortmanager-Entität H-LM eines zweiten UEs zu senden, wobei die Routenanforderungsnachricht eine Internetprotokoll-Adresse bzw. IP-Adresse des zweiten UEs umfasst, und wobei der H-LM als der Standort ermittelt wird, welcher der IP-Adresse des zweiten UEs entspricht;
eine erste Empfangseinheit, die zum Empfangen einer Routenantwortnachricht konfiguriert ist, die durch den H-LM des zweiten UEs gesendet wurde, wobei die Routenantwortnachricht eine Adresse eines zweiten MRs in einem Netzwerk umfasst, in dem sich das zweite UE zurzeit befindet; und
eine Aufbaueinheit, die konfiguriert ist, um einen Weiterleitungstunnel zwischen dem MR und dem zweiten MR gemäß der Adresse des zweiten MRs aufzubauen, wobei
mindestens ein UE des ersten UEs und des zweiten UEs sich zurzeit in einem besuchten Netzwerk befindet;
wobei der MR ferner umfasst:
eine zweite Empfangseinheit, die zum Empfangen eines Pakets konfiguriert ist, welches von dem ersten UE mit dem Ziel des zweiten UEs gesendet wurde;
eine Erfassungseinheit, die zum Erfassen der IP-Adresse des zweiten UEs aus dem Paket konfiguriert ist, welches von der zweiten Empfangseinheit empfangen wurde;
eine Puffereinheit, die konfiguriert ist, um das Paket zu puffern, welches von der zweiten Empfangseinheit empfangen wurde; und
eine Übertragungseinheit, die zum Übertragen des von der Puffereinheit gepufferten Pakets an den zweiten MR über den von der Aufbaueinheit aufgebauten Weiterleitungstunnel konfiguriert ist.

7. MR nach Anspruch 6, wobei, wenn sich das erste UE zurzeit in einem Heimnetzwerk befindet, die Routenanforderungsnachricht ferner erste Flag-Bit-Informationen umfasst, und die ersten Flag-Bit-Informationen verwendet werden, um anzugeben, dass der erste MR ein mobiler Heimrouter H-MR des ersten UEs ist.

8. MR nach Anspruch 6, wobei, wenn sich das zweite UE zurzeit in einem Heimnetzwerk befindet, die Routenantwortnachricht ferner zweite Flag-Bit-Informationen umfasst, und die zweiten Flag-Bit-Informationen verwendet werden, um anzugeben, dass der zweite MR ein H-MR des zweiten UEs ist.

9. MR nach einem der Ansprüche 6 bis 8, wobei die Aufbaueinheit umfasst:
eine erste Sendeuntereinheit, die zum Senden einer ersten Tunnelaufbauanforderungsnachricht an den zweiten MR konfiguriert ist; und
eine erste Empfangsuntereinheit, die zum Empfangen einer ersten Tunnelaufbauantwortnachricht konfiguriert ist, die durch den zweiten MR gesendet wurde, um so das Aufbauen des Weiterleitungstunnels abzuschließen.

10. MR nach einem der Ansprüche 6 bis 8, wobei die Aufbaueinheit umfasst:
eine zweite Empfangsuntereinheit, die zum Empfangen einer zweiten Tunnelaufbauanforderungsnachricht konfiguriert ist, die von dem zweiten MR gesendet wurde; und
eine zweite Sendeuntereinheit, die zum Senden einer zweiten Tunnelaufbauantwortnachricht an den zweiten MR konfiguriert ist, um so das Aufbauen des Weiterleitungstunnels abzuschließen.

11. MR nach einem der Ansprüche 6 bis 10, wobei der MR ferner eine Bindeeinheit umfasst, die zum Binden der folgenden Informationen konfiguriert ist: einer IP-Adresse des ersten UEs, der IP-Adresse des zweiten UEs, der Adresse des zweiten MRs und Tunnelinformationen des Weiterleitungstunnels.

12. MR nach Anspruch 11, wobei der MR ferner eine Bindungslöseeinheit umfasst, die zum Lösen des Bindens der Informationen konfiguriert ist, wenn sich das erste UE zurzeit in einem besuchten Netzwerk befindet und das erste UE sich zurzeit nicht länger innerhalb eines Dienstbereichs des MRs befindet, oder wenn sich das zweite UE zurzeit in einem besuchten Netzwerk befindet und sich das zweite UE zurzeit nicht länger innerhalb eines Dienstbereichs des zweiten MRs befindet.

13. MR nach einem der Ansprüche 6 bis 12, wobei der MR ferner eine Freigabeeinheit umfasst, die zum Freigeben des Weiterleitungstunnels konfiguriert ist, wenn der Weiterleitungstunnel nicht gemeinsam mit einem anderen UE genutzt wird.

## Revendications

1. Procédé d'optimisation de routage, le procédé consistant à :
établir un tunnel de transfert entre un premier routeur mobile, MR, dans un réseau où se trouve actuellement un premier équipement d'utilisateur, UE, et un second MR dans un réseau où se trouve actuellement un second UE, au moins un UE des premier et second UE se trouvant actuellement dans un réseau visité ; et
transmettre des données entre le premier UE et le second UE sur le tunnel de transfert ;
l'établissement d'un tunnel de transfert entre un premier MR dans un réseau où se trouve actuellement un premier UE et un second MR dans un réseau où se trouve actuellement un second UE consistant à :
envoyer, par le premier MR, un premier message de demande de route à une entité gestionnaire de localisation domestique, H-LM, du second UE, le premier message de demande de route comprenant une adresse sur protocole Internet, IP, du second UE acquise par le premier MR dans un paquet envoyé par le premier UE avec la destination du second UE, et l'entité H-LM étant déterminée comme étant le gestionnaire de localisation correspondant à l'adresse IP du second UE ;
recevoir, par le premier MR, un premier message de réponse de route envoyé par l'entité H-LM du second UE, le premier message de réponse de route comprenant une adresse du second MR ; et
établir, par le premier MR, un tunnel de transfert entre le premier MR et le second MR selon l'adresse du second MR.

2. Procédé selon la revendication 1, le procédé consistant en outre, avant l'envoi, par le premier MR, d'un premier message de demande de route à une entité H-LM du second UE, à :
recevoir, par le premier MR, le paquet envoyé par le premier UE ;
acquérir, par le premier MR, l'adresse IP du second UE dans le paquet ; et
mettre en mémoire tampon, par le premier MR, le paquet ; et
le procédé consistant en outre, après l'établissement, par le premier MR, d'un tunnel de transfert entre le premier MR et le second MR selon l'adresse du second MR, à : transmettre, par le premier MR, le paquet au second MR sur le tunnel de transfert.

3. Procédé selon la revendication 2, dans lequel, quand le premier UE se trouve actuellement dans un réseau domestique, le premier message de demande de route comprend en outre une première information de bit indicateur, et la première information de bit indicateur est utilisée pour indiquer que le premier MR est une entité H-MR de routeur mobile domestique du premier UE.

4. Procédé selon la revendication 2, dans lequel, quand le second UE se trouve actuellement dans un réseau domestique, le premier message de réponse de route comprend en outre une seconde information de bit indicateur, et la seconde information de bit indicateur est utilisée pour indiquer que le second MR est une entité H-MR du second UE.

5. Procédé selon l'une quelconque des revendications 2 à 4, dans lequel l'établissement, par le premier MR, d'un tunnel de transfert entre le premier MR et le second MR selon l'adresse du second MR consiste à :
envoyer, par le premier MR, un premier message de demande d'établissement de tunnel au second MR ; et
recevoir, par le premier MR, un premier message de réponse d'établissement de tunnel envoyé par le second MR, de manière à achever l'établissement du tunnel de transfert.

6. Routeur mobile, MR, le MR étant un MR dans un réseau où se trouve actuellement un premier équipement d'utilisateur, UE, et le MR comprenant :
une unité d'envoi, configurée pour envoyer un message de demande de route à une entité gestionnaire de localisation domestique, H-LM, d'un second UE, le message de demande de route comprenant une adresse sur protocole Internet, IP, du second UE, et l'entité H-LM étant déterminée comme étant le gestionnaire de localisation correspondant à l'adresse IP du second UE ;
une première unité de réception, configurée pour recevoir un message de réponse de route envoyé par l'entité H-LM du second UE, le message de réponse de route comprenant une adresse d'un second MR dans un réseau où se trouve actuellement le second UE ; et
une unité d'établissement, configurée pour établir un tunnel de transfert entre le MR et le second MR selon l'adresse du second MR,
au moins un UE des premier et second UE se trouvant actuellement dans un réseau visité ;
le MR comprenant en outre :
une seconde unité de réception, configurée pour recevoir un paquet envoyé par le premier UE avec la destination du second UE ;
une unité d'acquisition, configurée pour acquérir l'adresse IP du second UE à partir du paquet reçu par la seconde unité de réception ;
une unité de mise en mémoire tampon, configurée pour mettre en mémoire tampon le paquet reçu par la seconde unité de réception ; et
une unité de transmission, configurée pour transmettre, au second MR sur le tunnel de transfert établi par l'unité d'établissement, le paquet mis en mémoire tampon par l'unité de mise en mémoire tampon.

7. MR selon la revendication 6, dans lequel, quand le premier UE se trouve actuellement dans un réseau domestique, le message de demande de route comprend en outre une première information de bit indicateur, et la première information de bit indicateur est utilisée pour indiquer que le MR est une entité H-MR de routeur mobile domestique du premier UE.

8. MR selon la revendication 6, dans lequel, quand le second UE se trouve actuellement dans un réseau domestique, le message de réponse de route comprend en outre une seconde information de bit indicateur, et la seconde information de bit indicateur est utilisée pour indiquer que le second MR est une entité H-MR du second UE.

9. MR selon l'une quelconque des revendications 6 à 8, dans lequel l'unité d'établissement comprend :
une première sous-unité d'envoi, configurée pour envoyer un premier message de demande d'établissement de tunnel au second MR ; et
une première sous-unité de réception, configurée pour recevoir un premier message de réponse d'établissement de tunnel envoyé par le second MR, de manière à achever l'établissement du tunnel de transfert.

10. MR selon l'une quelconque des revendications 6 à 8, dans lequel l'unité d'établissement comprend :
une seconde sous-unité de réception, configurée pour recevoir un second message de demande d'établissement de tunnel envoyé par le second MR ; et
une seconde sous-unité d'envoi, configurée pour envoyer un second message de réponse d'établissement de tunnel au second MR, de manière à achever l'établissement du tunnel de transfert.

11. MR selon l'une quelconque des revendications 6 à 10, le MR comprenant en outre une unité de liaison, configurée pour lier les informations suivantes : une adresse IP du premier UE, l'adresse IP du second UE, l'adresse du second MR et une information de tunnel du tunnel de transfert.

12. MR selon la revendication 11, le MR comprenant en outre une unité d'annulation de liaison, configurée pour annuler la liaison des informations quand le premier UE se trouve actuellement dans un réseau visité et le premier UE ne se trouve actuellement plus dans une plage de service du MR, ou quand le second UE se trouve actuellement dans un réseau visité et le second UE ne se trouve actuellement plus dans une plage de service du second MR.

13. MR selon l'une quelconque des revendications 6 à 12, le MR comprenant en outre une unité de libération, configurée pour libérer le tunnel de transfert quand le tunnel de transfert n'est pas partagé par un autre UE.
